# EUROPÄISCHE PATENTSCHRIFT

(11) **EP 4 067 272 B1**
(45) Veröffentlichungstag und Bekanntmachung des Hinweises auf die Patenterteilung: **04.09.2024**
(21) Anmeldenummer: 22163616.0
(22) Anmeldetag: 22.03.2022
(51) Int. Cl.: B65G 54/02, B65G 23/22, B65G 23/23

(54) **TRANSPORTSYSTEM**
TRANSPORT SYSTEM
SYSTÈME DE TRANSPORT

(30) Priorität: 23.03.2021 DE 102021107189
(43) Veröffentlichungstag der Anmeldung: 05.10.2022
(73) Patentinhaber: TAKTOMAT kurvengesteuerte Antriebssysteme GmbH, 86554 Pöttmes (DE)
(72) Erfinder: HOFSTETTER, Norbert, 86676 Hollenbach (DE)
(74) Vertreter: Glück Kritzenberger Patentanwälte PartGmbB

(56) Entgegenhaltungen:
- DE-A1- 102014 100 636
- DE-A1- 102014 226 965
- DE-A1- 102018 100 409
- JP-A- 2014 133 609
- JP-A- S5 589 133

## Beschreibung

Die vorliegende Erfindung betrifft ein Transportsystem zur Beförderung von Gegenständen entlang einer Transportstrecke. Mehr im Detail betrifft die vorliegende Erfindung ein Transportsystem mit einem verbesserten, elektromagnetischen Antriebssystem.

Umlaufende Transportvorrichtungen sind aus dem Stand der Technik in verschiedenen Ausgestaltungen bekannt. Beispielsweise zeigt die US 6,876,107 B2 eine umlaufende Transportvorrichtung, bei der an der Transportstrecke eine Vielzahl von Spulen angeordnet sind. Die Spulen sind dabei unmittelbar benachbart zueinander angeordnet und sind in einem Kurvenbereich der Transportstrecke derart ausgebildet, dass dort eine unmittelbare Nebeneinanderanordnung sichergestellt ist. Dabei weisen die Spulen bei Draufsicht eines in Richtung der Innenseite der Kurve folgende Gestalt auf.

Bei umlaufenden Transportvorrichtungen wird üblicherweise versucht, einen Kurvenradius möglichst klein zu wählen, um einen kompakten Aufbau sicherzustellen. Durch die in der US 6,876,107 B2 vorgeschlagene Spulenanordnung ist es zwar möglich, auf der geraden Transportstrecke eine konstante Geschwindigkeit mit Läufern zu fahren, jedoch nicht im Kurvenbereich. Die dort offenbarte Anordnung der Spulen reduziert die Fördergeschwindigkeit im Kurvenbereich, so dass es im Betrieb zu unerwünschten Störungen bzw. notwendig großen Abständen zwischen einzelnen Läufern kommt.

Ferner ist aus der EP 2 560 904 B1 eine Transportvorrichtung zur Beförderung eines Produkts bekannt, wobei die Transportvorrichtung eine Vielzahl von unabhängig voneinander bewegbaren Förderelementen zum Fördern von Produkten, eine ortsfeste, umlaufend angeordnete Laufschiene, welche einen Laufpfad mit wenigstens einer Laufbahn für das Förderelement definiert und eine Linearmotorantriebsvorrichtung zum Antreiben der Förderelemente umfasst, wobei jedes Förderelement Permanentmagnete aufweist, die mit Spulen der Linearantriebsvorrichtung in Wirkverbindung stehen und wobei jedes Förderelement wenigstens ein erstes Teilelement und ein zweites Teilelement aufweist, welche mittels Gelenke gelenkig miteinander verbunden sind. Jedes Förderelement weist einen modularen Aufbau auf und die einzelnen Teilelemente einen gleichen Grundaufbau. Eine Gelenkachse eines jeden Gelenks ist parallel zur Laufbahn angeordnet.

Schließlich ist aus der DE 10 2017 108 572 A1 ein Lineartransportsystem zur Förderung eines Objekts bekannt geworden, wobei das Lineartransportsystem wenigstens eine ortsfeste Laufschiene und wenigstens eine bewegbare Fördereinrichtung umfasst. Die Fördereinrichtung umfasst hierbei eine erste Führungseinheit mit einer ersten Laufrolle, einer zweiten Laufrolle und einem ersten Drehschemel, wobei an dem ersten Drehschemel die erste Laufrolle und die zweite Laufrolle drehbar gelagert sind und an der Laufschiene anliegen, wobei die Laufschiene eine in Längsrichtung verlaufende Schienenlängsachse aufweist. Ferner ist der erste Drehschemel drehbar um eine Drehschemelachse gelagert, wobei die Drehschemelachse geneigt, insbesondere senkrecht, zu der Schienenlängsachse angeordnet ist.

Aus der Druckschrift DE 10 2014 226 965 A1, in der die Merkmale des Oberbegriffs von Anspruch 1 enthalten sind, ist eine Inspektionsvorrichtung zum fortlaufenden Inspizieren von zugeführten Behältern, insbesondere von Flaschen, bekannt, umfassend eine Zufuhrfördereinrichtung, die dazu ausgebildet ist, der Inspektionsvorrichtung aufeinanderfolgend Behälter zuzuführen, wenigstens eine Inspektionseinrichtung, die dazu ausgebildet ist, die zugeführten Behälter zu inspizieren, eine Abfuhrfördereinrichtung, die dazu ausgebildet ist, die inspizierten Behälter abzuführen, und eine zwischen der Zufuhrfördereinrichtung und der Abfuhrfördereinrichtung angeordnete Durchlaufstation für die Behälter, wobei die Durchlaufstation eine Transporteinrichtung mit einem Individualantrieb und einer Vielzahl von mittels des Individualantriebs einzeln und unabhängig voneinander bewegbaren Fördermitteln aufweist, die dazu ausgebildet ist, die Behälter von der Zufuhrfördereinrichtung zu der Abfuhrfördereinrichtung zu befördern.

Aus der Druckschrift JP 2014 133609 A ist eine lineare Trägervorrichtung bekannt geworden, die in der Lage ist, eine Position eines beweglichen Elements in einem gesamten Umfang eines Zirkulationsdurchgangs zu steuern. In dem Zirkulationsdurchgang, der eine Kartontransportvorrichtung als lineare Trägervorrichtung konfiguriert, werden bewegliche Elemente, in denen vorderseitige Halteelemente und hintere Halteelemente vorgesehen sind, vor und nach einem Karton positioniert. In der Zirkulationspassage sind ein Linearmotor-Steuerabschnitt und ein Nicht-Linearmotor-Steuerabschnitt vorgesehen.

Nachteilig an diesen bekannten Lösungen ist eine unzureichende mechanische Stabilität zum Transportieren von schwereren Lasten als Gegenstände mittels des zumindest einen Läufers entlang der Laufschiene. Auch für den Transport von schweren Gegenständen mittels des zumindest einen Läufers sollte dabei ein hochpräzise und möglichst toleranzfreie Führung des Läufers entlang der Transportstrecke möglich sein. Zudem nachteilig sind die hohen Kosten, die durch die Bereitstellung und Installation eines elektromagnetischen Antriebs in solchen Transportsystemen entstehen. Diese hohen Kosten werden regelmäßig in Kauf genommen, um die mittels eines elektromagnetischen Antriebs verbunden Vorteile einer beispielsweise hochpräzisen Ansteuerbarkeit - und das separat und unabhängig für jeden einzelnen Läufer - in einem Transportsystem realisieren zu können.

Aufgabe der vorliegenden Erfindung ist es daher, ein Transportsystem zur Beförderung von Gegenständen entlang einer Transportstrecke aufzuzeigen, welches die aus dem Stand der Technik bekannten Nachteile vermeidet und dabei eine hochpräzise Zuführung der Läufer TAK024PEP bei gleichzeitig deutlich reduzierten Kosten des Transportsystems ermöglicht. Zur Lösung dieser Aufgabe ist ein Transportsystem entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein Transportsystem zur Beförderung von Gegenständen entlang einer Transportstrecke vorzuschlagen, wobei die Transportstrecke aus zumindest einem ersten Transportstreckenabschnitt und zumindest einem zweiten Transportstreckenabschnitt gebildet ist. Ferner umfasst das Transportsystem wenigstens eine ortsfeste Laufschiene und zumindest einen entlang der Laufschiene bewegbaren Läufer zum Befördern der Gegenstände entlang der Transportstrecke umfasst. Auch umfasst das Transportsystem einen elektromagnetischen Antrieb zum Antreiben des zumindest einen Läufers entlang des ersten Transportstreckenabschnittes mittels elektromagnetischer Kräfte, wobei der elektromagnetische Antrieb eine Vielzahl von ortsfesten Spulenelementen und zumindest einen Permanentmagneten aufweist, wobei die ortsfesten Spulenelemente des elektromagnetischen Antriebs an der ortsfesten Laufschiene ausschließlich entlang des ersten Transportstreckenabschnittes vorgesehen sind und der zumindest eine Permanentmagnet an dem zumindest einen Läufer vorgesehen ist. Schließlich weist das Transportsystem einen mechanischen Antrieb zum Antreiben des zumindest einen Läufers entlang des zweiten Transportstreckenabschnittes mittels mechanischer Kräfte auf. Damit wird in dem erfindungsgemäßen Transportsystem nur entlang des ersten Transportstreckenabschnittes der elektromagnetische Antrieb zum Antreiben der Läufer vorgesehen, während entlang des zweiten Transportstreckenabschnittes ein im Vergleich zu dem elektromagnetischen Antrieb deutlich kostengünstigerer mechanischer Antrieb vorgesehen ist. Vorteilhaft kann damit entlang des ersten Transportstreckenabschnittes der Läufer mittels des elektromagnetischen Antriebs hochpräzise an die gewünschte Position zur Anförderung von Gegenständen, Bauteilen oder Werkzeugen eingesetzt werden und dieser Läufer dann mittels des mechanischen Antriebs wieder rückgeführt werden. Für die technisch unkritische Rückführung, auf der es nicht auf die hohe Präzision ankommt, ist dabei erfindungsgemäß der mechanische Antrieb vorgesehen. Damit kann man jedoch über weite Strecken entlang der Transportstrecke auf die kostenintensiven Bauteile des elektromagnetischen Antriebs verzichten und stattdessen hier einen mechanischen Antrieb, wie beispielsweise einen Zahnriemenantrieb, verwenden.

Erfindungsgemäß ist dabei vorgesehen, dass die Laufschiene zumindest abschnittsweise entlang des ersten und/oder des zweiten Transportstreckenabschnittes eine erste und zweite Führungseinrichtung aufweist, mittels der der zumindest eine Läufer jeweils beidseitig mit zwei zueinander beabstandeten und jeweils zwischen der ersten und zweiten Führungseinrichtung verlaufenden Gelenkachsen geführt ist.

Erfindungsgemäß ist dabei weiter vorgesehen, dass die Gelenkachsen jeweils an einem ersten freien Ende mit einer ersten Führungs- und Lagereinrichtung in der ersten Führungseinrichtung und an einem jeweiligen zweiten freien Ende mit einer zweiten Führungs- und Lagereinrichtung in der zweiten Führungseinrichtung geführt sind.

Die ersten und zweiten Führungs- und Lagereinrichtungen umfassen jeweils wenigstens eine erste und zweite Laufrolle, die zwischen einer ersten und zweiten, einander gegenüberliegenden und parallel zu den Gelenkachsen verlaufenden Führungsfläche der jeweiligen Führungseinrichtung geführt sind.

Die jeweils erste Laufrolle liegt in einem ersten Anlageabschnitt der ersten Führungsfläche und die jeweils zweite Laufrolle in einem zweiten Anlageabschnitt der zweiten Führungsfläche an und sind zueinander vorgespannt geführt, wobei der erste und zweite Anlageabschnitt entlang der Gelenkachsen zueinander versetzt und einander gegenüberliegend sind. Durch die gegenseitig vorgespannte Führung der Laufrollen der Führungs- und Lagereinrichtung in der ersten und zweiten Führungseinrichtung wird dabei auch bei Aufnahme schwererer Gegenstände auf oder an dem Läufer eine hochpräzise und möglichst toleranzfreie Führung des Läufers entlang der Transportstrecke ermöglicht.

Gemäß einer nochmals weiteren vorteilhaften Ausführungsvariante ist dabei vorgesehen, dass die Transportstrecke mit einem ersten und zweiten Bogenabschnitt und einem ersten und zweiten Geradenabschnitt endlos umlaufend ausgebildet ist, wobei der erste Transportstreckenabschnitt zumindest an dem ersten Geradenabschnitt vorgesehen ist.

Gemäß einer nochmals weiteren vorteilhaften Ausführungsvariante ist dabei vorgesehen, dass der zweite Transportstreckenabschnitt zumindest an dem zweiten Geradenabschnitt sowie zumindest abschnittsweise an dem ersten und zweiten Bogenabschnitt ausgebildet ist.

Gemäß einer nochmals weiteren vorteilhaften Ausführungsvariante ist dabei vorgesehen, dass der erste Transportstreckenabschnitt der Transportstrecke durch den ersten Geradenabschnitt gebildet ist und der zweite Transportstreckenabschnitt durch die beiden Bogenabschnitte und den diese Bogenabschnitte verbindenden zweiten Geradenabschnitt gebildet ist.

Gemäß einer nochmals weiteren vorteilhaften Ausführungsvariante ist dabei vorgesehen, dass entlang des als ersten Geradenabschnitt ausgebildeten ersten Transportstreckenabschnittes der elektromagnetische Antrieb zum Antreiben des zumindest einen Läufers mittels elektromagnetischer Kräfte vorgesehen ist und/oder entlang des als die beiden Bogenabschnitte und des diese Bogenabschnitte verbindenden zweiten Geradenabschnittes ausgebildeten zweiten Transportstreckenabschnitt der mechanische Antrieb zum Antreiben des zumindest einen Läufers mittels mechanischer Kräfte vorgesehen ist.

Gemäß einer weiteren vorteilhaften Ausführungsvariante kann dabei vorgesehen sein, dass die jeweiligen beiden freien Enden der beiden Gelenkachsen in der ersten und zweiten Führungseinrichtung in zwei gegenüberliegend und parallel zur Transportstrecke orientierten Führungsebenen geführt sind.

Gemäß einer nochmals weiteren vorteilhaften Ausführungsvariante kann dabei vorgesehen sein, dass die jeweilige erste und zweite Laufrolle der entsprechend ersten Führungs- und Lagereinrichtung um die jeweilige Gelenkachse drehbar und unmittelbar benachbart an dieser im Bereich des jeweiligen ersten freien Endes vorgesehen sind.

Gemäß einer nochmals weiteren vorteilhaften Ausführungsvariante kann dabei vorgesehen sein, dass die jeweilige erste und zweite Laufrolle der entsprechenden zweiten Führungs- und Lagereinrichtung um die jeweilige Gelenkachse drehbar und unmittelbar benachbart an dieser im Bereich des jeweiligen zweiten freien Endes vorgesehen sind.

Gemäß einer nochmals weiteren vorteilhaften Ausführungsvariante kann dabei vorgesehen sein, dass die jeweilige erste Laufrolle der ersten Führungs- und Lagereinrichtung an dem ersten Anlageabschnitt der ersten Führungsfläche anliegend gegen die an dem zweiten Anlageabschnitt der zweiten Führungsfläche jeweils anliegende zweite Laufrolle in der ersten Führungseinrichtung vorgespannt geführt ist und die jeweils erste Laufrolle der zweiten Führungs- und Lagereinrichtung an dem ersten Anlageabschnitt der ersten Führungsfläche anliegend gegen die jeweilige an dem zweiten Anlageabschnitt der zweiten Führungsfläche anliegende zweite Laufrolle in der zweiten Führungseinrichtung vorgespannt geführt ist.

Gemäß einer nochmals weiteren vorteilhaften Ausführungsvariante kann dabei vorgesehen sein, dass die jeweilige erste und zweite Laufrolle der ersten Führungs- und Lagereinrichtung der entsprechenden Gelenkachse vorgespannt gegenüber der jeweiligen ersten und zweiten Laufrolle der zweiten Führungs- und Lagereinrichtung der entsprechenden Gelenkachse geführt sind.

Gemäß einer nochmals weiteren vorteilhaften Ausführungsvariante kann dabei vorgesehen sein, dass die erste Führungseinrichtung zwischen der ersten und zweiten Führungsfläche einen ersten Führungsraum aufweist, der im Bereich der ersten und zweiten Anlagefläche in den ersten Führungsraum zurückspringt, indem der erste Führungsraum in diesem Bereich gestuft ausgebildet ist.

Gemäß einer nochmals weiteren vorteilhaften Ausführungsvariante kann dabei vorgesehen sein, dass die zweite Führungseinrichtung zwischen der ersten und zweiten Führungsfläche einen zweiten Führungsraum aufweist, der im Bereich der ersten und zweiten Anlagefläche in den zweiten Führungsraum zurückspringt, indem der zweite Führungsraum in diesem Bereich gestuft ausgebildet ist.

Gemäß einer nochmals weiteren vorteilhaften Ausführungsvariante kann dabei vorgesehen sein, dass die Laufrollen identisch zueinander ausgebildete Außendurchmesser aufweisen.

Gemäß einer nochmals weiteren vorteilhaften Ausführungsvariante kann dabei vorgesehen sein, dass sämtliche Laufrollen jeweils mittels zwei Rollenlagen drehbar um die entsprechende Gelenkachse gelagert sind.

Gemäß einer nochmals weiteren vorteilhaften Ausführungsvariante kann dabei vorgesehen sein, dass mehrere unabhängig und autonom zueinander entlang der Transportstrecke bewegbare Läufer vorgesehen sind, wobei der elektromagnetische Antrieb als Linearantrieb, vorzugsweise als Langstator-Linearantrieb ausgebildet ist.

Gemäß einer nochmals weiteren vorteilhaften Ausführungsvariante kann dabei vorgesehen sein, dass der Läufer an einer der Oberseite gegenüberliegenden Unterseite zumindest vier weitere, in ihrer jeweiligen Längserstreckung lotrecht zu den ersten beiden Gelenkachsen stehende Gelenkachsen aufweist, die sich paarweise entlang einer Führungsschiene gegenüberliegen.

Gemäß einer nochmals weiteren vorteilhaften Ausführungsvariante kann dabei vorgesehen sein, dass den jeweiligen freien Enden der Gelenkachsen jeweils eine drehbare Laufrolle angeordnet ist.

Gemäß einer nochmals weiteren vorteilhaften Ausführungsvariante kann dabei vorgesehen sein, dass die entsprechenden Laufflächen der Laufrollen senkrecht zu den Laufflächen der Laufrollen verlaufen.

Gemäß einer nochmals weiteren vorteilhaften Ausführungsvariante kann dabei vorgesehen sein, dass sämtliche Laufrollen identisch untereinander, sowie vorzugsweise identisch zu den Laufrollen ausgebildet sind.

Gemäß einer nochmals weiteren vorteilhaften Ausführungsvariante kann dabei vorgesehen sein, dass sämtliche Laufrollen jeweils mittels zwei Rollenlager drehbar um die entsprechende Gelenkachse gelagert sind.

Gemäß einer nochmals weiteren vorteilhaften Ausführungsvariante kann dabei vorgesehen sein, dass die Führungsschiene an der Oberseite des Antriebsmoduls der Laufschiene entlang dessen Längserstreckung vorgesehen ist und die mit den an der Unterseite des Läufers angeordneten Laufrollen in Wirkeingriff steht.

Gemäß einer nochmals weiteren vorteilhaften Ausführungsvariante kann dabei vorgesehen sein, dass die Führungsschiene eine seitliche Führung für den Läufer ausbildet, der sich während seiner Bewegung beidseitig sowie kontaktschlüssig entlang der Transportstrecke mit seinen Laufrollen an der Führungsschiene entlang rollt bzw. an dieser abwälzt.

Erfindungsgemäß ist dabei vorgesehen sein, dass die erste und/oder zweite Gelenkachse des Läufers jeweils an dem ersten und zweiten freien Ende einen ersten und zweiten Gelenkachsenabschnitt aufweist, wobei der erste Gelenkachsenabschnitt eine erste Rotationsache für die jeweils erste Laufrolle und der jeweils zweite Gelenkachsenabschnitt eine zweite Rotationsachse für die jeweils zweite Laufrolle ausbildet, und wobei die jeweils erste Rotationsachse versetzt, insbesondere parallel versetzt, zu der jeweils zweiten Rotationsachse verläuft und/oder dass die erste und/oder die zweite Gelenkachse im Bereich der jeweiligen Gelenkachsenabschnitte als Exzenterachse ausgebildet ist.

Gemäß einer nochmals weiteren vorteilhaften Ausführungsvariante kann dabei vorgesehen sein, dass der mechanische Antrieb zum Antreiben des zumindest einen Läufers mittels mechanischer Kräfte ein entlang der Transportstrecke endlos umlaufendendes, motorisch angetriebenes Transportelement aufweist, an dem mehrere Mitnehmer angeordnet sind, die sich mit dem Transportelement mitbewegen und wobei die Mitnehmer ausschließlich entlang des zweiten Transportstreckenabschnittes in schiebendem Wirkeingriff mit dem zumindest einen Läufer stehen.

Gemäß einer nochmals weiteren vorteilhaften Ausführungsvariante kann dabei vorgesehen sein, dass der mechanische Antrieb mehrere Umlenkeinrichtungen, beispielsweise in Form von Umlenkrollen, aufweist, die das innerhalb der Laufschiene endlos umlaufende Transportelement derart führen und umlenken, dass die mit dem Transportelement mitbewegten Mitnehmer ausschließlich im Bereich des zweiten Transportstreckenabschnittes mit dem zumindest einen Läufer in mechanischem Wirkeingriff stehen.

Gemäß einer nochmals weiteren vorteilhaften Ausführungsvariante kann dabei vorgesehen sein, dass der mechanische Antrieb als Riemenantrieb ausgebildet ist, der mehrere an einem als Riemen ausgebildeten Transportelement angeordnete Mitnehmer aufweist, die entlang des zweiten Transportstreckenabschnittes in schiebendem Wirkeingriff mit dem zumindest einen Läufer stehen.

Gemäß einer nochmals weiteren vorteilhaften Ausführungsvariante kann dabei vorgesehen sein, dass der jeweilige Mitnehmer des als Riemen ausgebildeten Transportelementes in mechanischem Wirkeingriff mit dem Signalgeber des zumindest einen Läufers steht, indem der Mitnehmer den zumindest einen Läufer am Signalgeber entlang des zweiten Transportstreckenabschnittes in Transportrichtung anschiebt.

Unter "getaktet" wird im Rahmen der vorliegenden Erfindung eine intermittierende Bewegungen verstanden, die sich im Gegensatz zu einer kontinuierlichen Bewegung durch schrittweise oder periodisch wiederkehrende Bewegungsabläufe auszeichnen, und zwar mit einem Stillstand nach oder vor jedem Bewegungsschritt. Ein intermittierend bewegtes Element, das beispielsweise ein um definierte Wegstrecke bewegter Läufer sein kann, vollzieht hierbei ein Bewegungsprofil, bei dem der Läufer periodisch nahezu stoß- und/oder ruckfrei auf eine gewisse Geschwindigkeit beschleunigt und anschließend wieder abgebremst wird. Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1a: in vereinfachter Seitenansicht eine beispielhafte Ausführungsvariante eines erfindungsgemäßen Transportsystems;
- Fig. 1b: in teilweiser geschnittener Darstellung und Seitenansicht eine beispielhafte Ausführungsvariante eines erfindungsgemäßen Transportsystems gemäß Figur 1a;
- Fig. 2: ein teilweise offen dargestellter Vertikalschnitt eines ausschnittsweise abgebildeten Transportsystems gemäß der Figur 1 im Bereich der ersten und zweiten Führungseinrichtung mit einem Läufer;

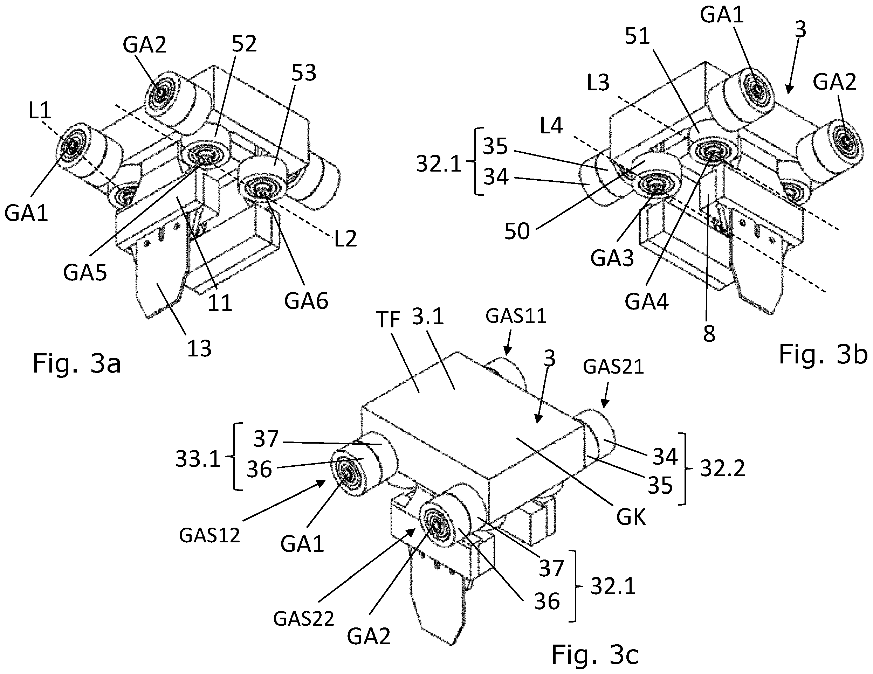

- Fig. 3a bis c: eine Ausführungsvariante eines Läufers in jeweils unterschiedlicher Perspektivdarstellung;

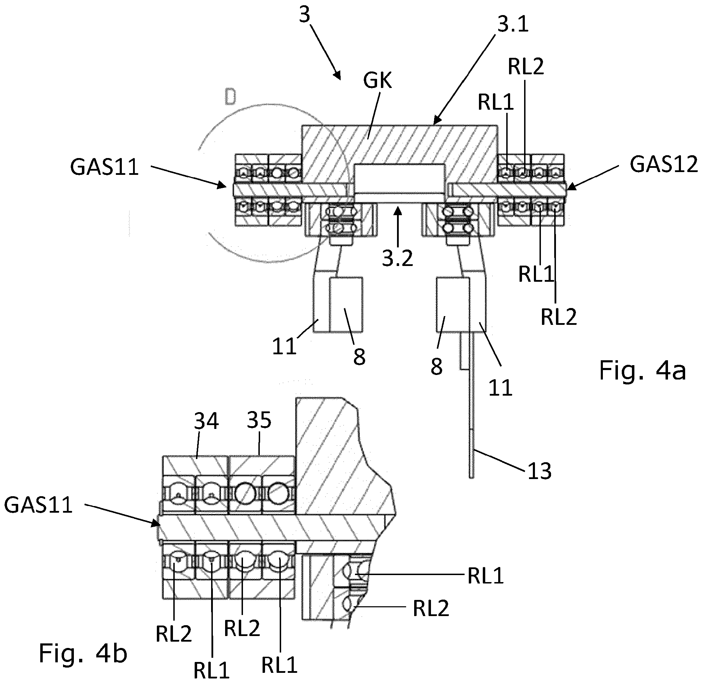

- Fig. 4a: ein Vertikalschnitt eines Läufers gemäß der Figuren 3a bis c;
- Fig. 4b: den in Figur 4a eingekreisten Bereich des Läufers in einer vergrößerten Darstellung;
- Fig. 5: einen Vertikalschnitt des Transportsystems gemäß der Figur 1 bzw. Figur 2 im Bereich der ersten und zweiten Führungseinrichtung mit einem Läufer; und
- Fig. 6a und b: einen Vertikalschnitt durch eine weitere beispielhafte Ausführungsvariante des Läufers.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

In den Figuren ist mit 1 ein Transportsystem zur Beförderung von Gegenständen entlang einer Transportstrecke TS bezeichnet. Die Transportstrecke TS ist dabei aus zumindest einem ersten Transportstreckenabschnitt TS1 und zumindest einem zweiten Transportstreckabschnitt TS2 gebildet bzw. weist den ersten und zweiten Transportstreckenabschnitt TS1, TS2 auf. Das Transportsystem 1 umfasst ferner eine ortsfeste Laufschiene 2 sowie zumindest einen entlang der Laufschiene 2 bewegbaren Läufer 3 zum Befördern der Gegenstände entlang der Transportstrecke TS. Die Bewegungsbahn der Laufschiene 2 ist dabei durch den Verlauf der Transportstrecke TS, bzw. deren ersten und zweiten Transportstreckenabschnitt TS1, TS2 definiert.

Ferner umfasst das Transportsystem 1 einen elektromagnetischen Antrieb 4 zum Antreiben des zumindest einen Läufers 3 entlang des ersten Transportstreckenabschnittes TS1 mittels elektromagnetischer Kräfte. Dabei kann der elektromagnetische Antrieb 4 des Transportsystems 1 auch zumindest ein, vorzugsweise jedoch mehrere identisch zueinander ausgebildete Antriebsmodule 5 aufweisen, die entlang des ersten Transportstreckenabschnittes TS1 der Transportstrecke TS modulartig benachbart vorgesehen sein können und dabei je Antriebsmodul 5 aneinander angeordnet werden.

In einer bevorzugten Ausführungsvariante ist auch die Laufschiene 2 modulartig ausgebildet und umfasst dabei mehrere Laufschienenmodule 2.1 die nach dem Prinzip eines Baukastens miteinander verbunden werden können.

Hierbei kann vorgesehen sein, dass einem jeden dem ersten Transportstreckenabschnitt TS1 zugeordneten Laufschienenmodul 2.1 ein separates Antriebsmodul 5 zugeordnet ist. In anderen Worten kann einem Laufschienenmodul 2.1 des ersten Transportstreckenabschnittes TS1 damit ein eigenes Antriebsmodul 5 zugeordnet sein, das nach dem Prinzip eines Schienenstecksystems zusammengebaut werden kann. Damit ist das bzw. die Antriebsmodule 5 als Teil bzw. Bestandteil der Laufschiene 2 entlang des ersten Transportstreckenabschnittes TS1 vorgesehen.

In anderen Worten umfasst also das Transportsystem 1 den elektromagnetischen Antrieb 4 vorteilhaft ausschließlich entlang des ersten Transportstreckenabschnittes TS1, um die Läufers 3 mittels elektromagnetischer Kräfte anzutreiben. Dabei weist der elektromagnetische Antrieb 4 eine Vielzahl von ortsfesten Spulenelementen 9 und zumindest einen Permanentmagneten 8 auf, wobei die ortsfesten Spulenelemente 9 des elektromagnetischen Antriebs 4 an der ortsfesten Laufschiene 2 ausschließlich entlang des ersten Transportstreckenabschnittes TS1 vorgesehen sind und der zumindest eine Permanentmagnet 8 an dem zumindest einen Läufer 3 vorgesehen ist,

Mithin kann das Transportsystem 1 mehrere Läufer 3 aufweisen, die zueinander identisch ausgebildet sein können, wobei die mehreren Läufer 3 beabstandet an der Laufschiene 2 vorgesehen sein können. Jeder Läufer 3 kann mittels des elektromagnetischen Antriebs 4 entlang des ersten Transportstreckenabschnittes TS1 unabhängig von den weiteren vorgesehenen Läufern 3 bewegt werden, und zwar vorzugsweise jeweils autonom.

Der elektromagnetische Antrieb 4 umfasst dabei einen Linearmotor 6 mit einem Stator 7, zumindest einem Permanentmagneten 8 und einer nicht weitergehend gezeigten zentralen Steuereinrichtung. Der Stator 7 kann dabei von einer Vielzahl von getrennt zueinander und beabstandet an der Laufschiene 2 vorgesehenen und bestrombar ausgebildeten Spulenelementen 9 gebildet sein, während der zumindest eine Permanentmagnet 8 an dem zumindest einem Läufer 3 angeordnet ist. Gemäß einer Ausführungsvariante sind die bestrombaren Spulenelemente 9 in dem jeweiligen Antriebsmodul 5 nebeneinander angeordnet. Ein jedes Antriebsmodul 5 ist mit der Laufschiene 2 verbunden bzw. als Teil oder Bestandteil der Laufschiene 2 ausgebildet.

Dabei sind die bestrombaren Spulenelemente 9 in einer Reihe parallel verlaufend zu der Laufschiene 2 angeordnet. Mehr im Detail kann der zumindest eine Permanentmagnet 8 derart an dem zumindest einen Läufer 3 vorgesehen sein, dass dieser seitlich des Stators 7 angeordnet ist. In anderen Worten weist also der elektromagnetische Antrieb 4 eine Vielzahl von ortsfesten Spulenelementen 9, die den Stator 7 bilden, und zumindest einen Permanentmagnet 8 auf, wobei die ortsfesten Spulenelemente 9 an der ortsfesten Laufschiene 2 und der zumindest eine Permanentmagnet 8 an dem zumindest einem Läufer 3 angeordnet sind.

Die Steuereinrichtung ist dabei mit dem Stator 7 elektrisch verbunden und dazu ausgebildet, einen Spulenstrom durch eine vordefinierte Anzahl von Spulenelementen 9, also einen Stromfluss durch die vordefinierte Anzahl von Spulenelementen 9, zu variieren. Der Spulenstrom erzeugt ein magnetisches Wechselfeld, das mit dem zumindest einen Permanentmagneten 8 wechselwirkt. Die Steuereinrichtung ist dabei dazu ausgebildet, die Bewegung des zumindest einen Läufers 3 entlang der Transportstrecke TS zu steuern - und/oder zu regeln und zwar für jeden Läufer 3 separat und unabhängig zu den weiteren Läufern 3.

Der elektromagnetische Antrieb 4 ist damit als Linearantrieb ausbildet, mehr im Detail als Langstator-Linearantrieb.

Mehr im Detail steuert und/oder regelt die Steuereinrichtung die Spulenströme durch die Spulenelemente 9 derart, dass über die Wechselwirkung der Permanentmagnete 8 mit dem durch die Spulenelemente 9 erzeugten magnetischen Wanderfeld eine entlang bzw. längs des Antriebsmoduls 5 gerichtete Kraft auf den zumindest einen Läufer 3 ausgeübt wird.

Ferner weist das Transportsystem 1 auch einen nachfolgend noch nähergehend beschriebenen mechanischen Antrieb 15 zum Antreiben des zumindest einen Läufers 3 entlang des zweiten Transportstreckenabschnittes TS2 mittels mechanischer Kräfte auf.

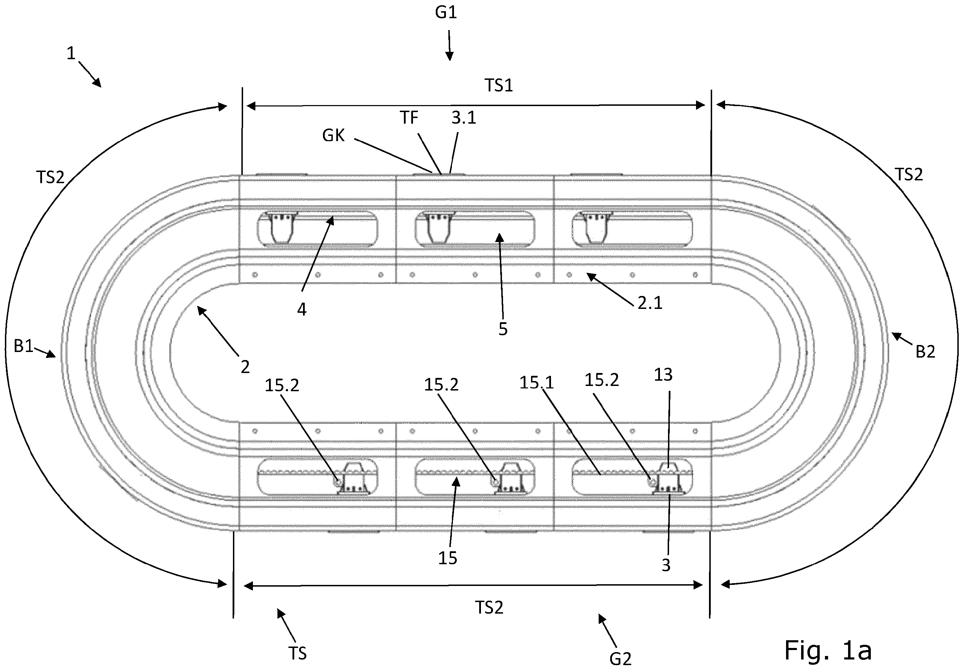

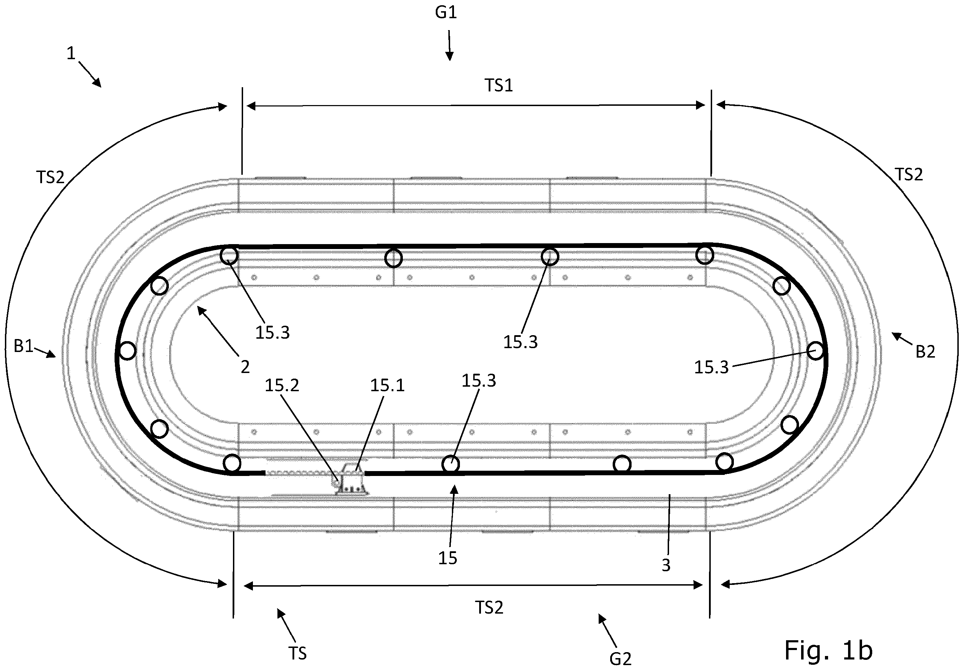

In der Ausführungsvariante der Figur 1 ist die Transportrecke TS als endlos umlaufende Transportstrecke TS ausgebildet, die insbesondere einen ovalförmigen Verlauf für die Laufschiene 2 definiert. Hierfür weist die Transportstrecke TS einen ersten Bogenabschnitt B1, einen zweiten Bogenabschnitt B2 sowie einen ersten Geradenabschnitt G1 und eine zweiten Geradenabschnitt G2 auf. Die beiden Geradenabschnitte G1, G2 sind dabei zwischen dem ersten und zweiten Bogenabschnitt B1, B2 vorgesehen und verbinden dabei die jeweiligen freien Enden der beiden Bogenabschnitt B1, B2 derart miteinander, dass die Laufschiene 2 eine im Wesentlichen ovale, geschlossen umlaufende Schleife für die Läufer 3 ausbildet. Die Transportstrecke TS umfasst dabei also die beiden Geradenabschnitte G1, G2 und die beiden Bogenabschnitte B1, B2.

Vorteilhaft ist dabei der erste Transportstreckenabschnitt TSA1 der Transportstrecke TS durch den ersten Geradenabschnitt G1 gebildet und der zweite Transportstreckenabschnitt TS2 durch die beiden Bogenabschnitte B1, B2 und den diese Bogenabschnitte B1, B2 verbindenden zweiten Geradenabschnitt G2.

Damit ist entlang des als ersten Geradenabschnitt G1 ausgebildeten ersten Transportstreckenabschnittes TS1 der elektromagnetische Antrieb 3 zum Antreiben der Läufer 2 mittels elektromagnetischer Kräfte vorgesehen. Ferner ist entlang des als die beiden Bogenabschnitte B1, B2 und des diese Bogenabschnitte B1, B2 verbindenden zweiten Geradenabschnittes G2 ausgebildeten zweiten Transportstreckenabschnitt TS2 der mechanische Antrieb 15 zum Antreiben der Läufer 2 mittels mechanischer Kräfte vorgesehen.

In anderen Worten steht also der elektromechanische Antrieb 3 im Bereich des ersten Transportstreckenabschnittes TS1 mit den Läufern 2 derart in Wirkverbindung, dass diese entlang des ersten Transportstreckenabschnittes TS1 mittels elektromagnetischer Kräfte angetrieben werden, während der mechanische Antrieb 15 im Bereich des zweiten Transportstreckenabschnittes TS2 mit den Läufern 2 derart in Wirkverbindung steht, dass diese entlang des zweiten Transportstreckenabschnittes TS2 mittels mechanischer Kräfte angetrieben werden.

In einer nicht dargestellten Ausführungsvariante ist der erste Transportstreckenabschnitt TSA1 der Transportstrecke TS durch den ersten Geradenabschnitt G1 und einen Teilabschnitt des ersten und/oder zweiten Bogenabschnittes B1, B2 gebildet und der zweite Transportstreckenabschnitt TS2 durch die verbleibenden Bogenabschnitte B1, B2 und den diese Bogenabschnitte B1, B2 verbindenden zweiten Geradenabschnitt G2.

In einer nochmals weiteren nicht dargestellten Ausführungsvariante der erste Transportstreckenabschnitt TSA1 der Transportstrecke TS durch den ersten Geradenabschnitt G1 und die gesamten beiden Bogenabschnitte B1, B2 gebildet und der zweite Transportstreckenabschnitt TS2 durch den die beiden Bogenabschnitte B1, B2 verbindenden zweiten Geradenabschnitt G2.

Beispielsweise kann der mechanische Antrieb 15 zum Antreiben der Läufer 2 mittels mechanischer Kräfte ein entlang der Transportstrecke TS endlos umlaufendendes, motorisch angetriebenes Transportelement 15.1 aufweisen, an dem mehrere Mitnehmer 15.2 angeordnet sind, die sich mit dem Transportelement 15.1 mitbewegen und wobei die Mitnehmer 15.2 ausschließlich entlang des zweiten Transportstreckenabschnittes TS2 in schiebendem Wirkeingriff mit den Läufern 2 stehen. Vorzugsweise können hierbei mehrere Umlenkeinrichtungen 15.3, beispielsweise in Form von Umlenkrollen, vorgesehen sein, die das vorzugsweise innerhalb der Laufschiene 2 endlos umlaufende Transportelement 15.1 derart führen und umlenken, dass die mit dem Transportelement 15.1 mitbewegten Mitnehmer 15.2 ausschließlich im Bereich des zweiten Transportstreckenabschnittes TS2 mit den Läufern 2 in mechanischem Wirkeingriff stehen.

Beispielsweise kann der mechanische Antrieb 15 als Riemenantrieb ausgebildet sein, der mehrere an einem als Riemen ausgebildeten Transportelement 15.1 angeordnete Mitnehmer 15.2 aufweist, die entlang des zweiten Transportstreckenabschnittes TS2 in schiebendem Wirkeingriff mit den Läufern 2 stehen. Mehr im Detail kann dabei der jeweilige Mitnehmer 15.2 des als Riemen ausgebildeten Transportelementes 15.1 in mechanischem Wirkeingriff mit dem Signalgeber 13 des entsprechenden Läufer 2 stehen, indem der Mitnehmer 15.2 den Läufer 2 am Signalgeber 13 entlang des zweiten Transportstreckenabschnittes TS2 in Transportrichtung anschiebt. Beispielsweise kann hierfür ein an dem Signalgeber 13 vorgesehenes, federbelastetes, mechanisches Koppelelement vorgesehen sein. Das mechanische Koppelelement kann dabei zwischen einer Greifposition und einer Freigabeposition verschoben werden, und zwar vorzugsweise in Längsrichtung des Signalgebers 13. In der Greifposition greift dabei das Koppelelement einen Mitnehmer 15.2, während das Koppelement in der Freigabeposition diesen Mitnehmer 15.2 wieder freigibt. Ferner kann das mechanische Koppelelement mittels einer Federkraft in der Greifposition gehalten werden, und muss dabei für die Freigabeposition entgegen der Federkraft aus der Greifposition in die Freigebeposition ausgelenkt werden. Die somit erzielbare, bzw. zulässige, Stellbewegung zwischen der Greifposition und der Freigabeposition wird über ein Langloch definiert, das den Anschlag zwischen den beiden Positionen des Koppelementes festlegt. Für die Freigabeposition wird das Koppelelement entgegen der Federkraft in Richtung des Transportelementes 15.1 bewegt und zwar derart, dass das Koppelement einen entsprechenden Mitnehmer 15.2 hintergreifen kann. Anschließend wird das Koppelelement durch die Federkraft in seine Greifposition gedrückt und in eine dazu entgegengesetzte Richtung verfahren, so dass der hintergriffene Mitnehmer 15.2 in Richtung des Signalgebers 13 gezogen wird. Insbesondere kann dabei vorgesehen sein, dass das Koppelelement den Mitnehmer in der Greifposition form- und/oder kontaktschlüssig greift. Gemäß einer nicht dargestellten Ausführungsvariante kann der mechanische Antrieb 15 auch anstatt des Riemens 15.1 eine Gliederkette aufweisen, also als Kettenantrieb ausgebildet sein.

Beispielsweise umfassen jeweiligen die Läufer 3 einen Grundkörper GK an dessen jeweiliger Oberseiten 3.1 eine Transport- oder Haltefläche TF aus, an der vorzugsweise jeweils eine Aufnahme, nicht gezeigt in den Figuren, vorgesehen sein kann, die für die Aufnahme von Gegenständen (z.B. Werkstücke oder andere Produkte) vorgesehen ist, die mit dem umlaufenden Läufern 3 in und/oder entgegen einer Transportrichtung A entlang der Transportstrecke TS bewegt werden können.

Wie bereits erwähnt, umfasst dabei ein jeder Läufer 3 einen im Wesentlichen rechteckförmigen Grundkörper GK an dessen Oberseite 3.1 eine Transport- oder Haltefläche TF ausgebildet ist. Zudem weist ein jeder Läufer 3 in Längsrichtung der Transportstrecke TS gesehen jeweils zueinander beabstandete erste und zweite Gelenkachsen GA1 und GA2 auf. Die jeweiligen Gelenkachsen GA1 und GA2 ihrerseits wiederum verlaufen dabei in ihrer jeweiligen Längserstreckung quer, vorzugsweise lotrecht, zur Längserstreckung der Transportstrecke TS. Zudem verläuft die Längserstreckung der ersten Gelenkachse GA1 vorzugsweise parallel zu der Längserstreckung der zweiten Gelenkachse GA2.

Vorteilhaft weist dabei die jeweilige Gelenkachse GA1, GA2 an ihrem entsprechenden ersten freien Ende GAS11, GAS21 eine erste Führungs- und Lagereinrichtung 32.1, 32.2 und an ihrem entsprechenden zweiten freien Ende GAS12, GAS22 eine entsprechende zweite Führungs- und Lagereinrichtung 33.1, 33.2 auf. Mehr im Detail weist dabei die erste Gelenkachse GA1 an ihrem ersten freien Ende GAS11 die erste Führungs- und Lagereinrichtung 32.1 und an ihrem zweiten freien Ende GAS12 die zweite Führungs- und Lagereinrichtung 33.1 auf, während die zweite Gelenkachse GA2 an ihrem ersten freien Ende GAS21 die erste Führungs- und Lagereinrichtung 32.2 und an ihrem zweiten freien Ende GAS22 die zweite Führungs- und Lagereinrichtung 33.2 aufweist.

Zudem umfassen die ersten und zweiten Führungs- und Lagereinrichtungen 32.1, 32.2, 33.1, 33.2 jeweils wenigstens eine erste und eine zweite Laufrolle 34, 35, 36, 37. Mehr im Detail umfasst dabei die erste Führungs- und Lagereinrichtung 32.1 der ersten Gelenkachse GA1 an ihrem ersten freien Ende GAS11 die erste und zweite Laufrolle 34 und 35, während die an dem zweiten freien Ende GAS12 der zweiten Führungs- und Lagereinrichtung 33.1 der ersten Gelenkachse GA1 die erste und zweite Laufrolle 36 und 37 vorgesehen sind. Ferner umfasst dabei die erste Führungs- und Lagereinrichtung 33.1 der zweiten Gelenkachse GA2 an ihrem ersten freien Ende GAS21 die erste und zweite Laufrolle 34 und 35, während die an dem zweiten freien Ende GAS22 der zweiten Führungs- und Lagereinrichtung 33.2 der zweiten Gelenkachse GA2 die erste und zweite Laufrolle 36 und 37 vorgesehen sind.

Dabei sind die jeweiligen Laufrollen 34 und 35 identisch zueinander sowie identisch zu den beiden weiteren Laufrollen 35 und 36 ausgebildet. Insbesondere weisen die Laufrollen 34 und 35 bzw. 36 und 37 einen identischen Durchmesser im Bereich der jeweiligen Lauffläche sowie ein identische Breite der Lauffläche auf.

Dabei kann die jeweilige Lauffläche sämtlicher Laufrollen 34...37 aus einem Kunststoff gebildet sein.

Ferner vorteilhaft sind dabei sämtliche Laufrollen 34...37 jeweils mittels zwei Rollenlager RL1, RL2 drehbar um die entsprechende Gelenkachse GA1, GA2 gelagert. Bevorzugt sind die Gelenkachsen GA1, GA2 drehfest in dem Läufer 3 aufgenommen bzw. angeordnet. Die jeweiligen Rollenlager RL1, RL2 sind dabei unmittelbar benachbart, vorteilhaft kontaktschlüssig benachbart, an der entsprechenden Gelenkachse GA1, GA2 angeordnet.

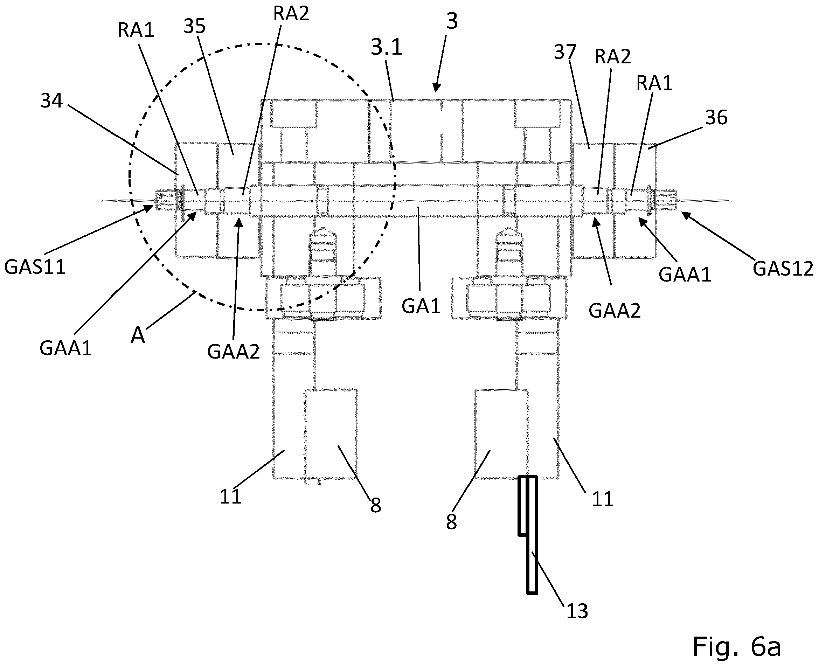

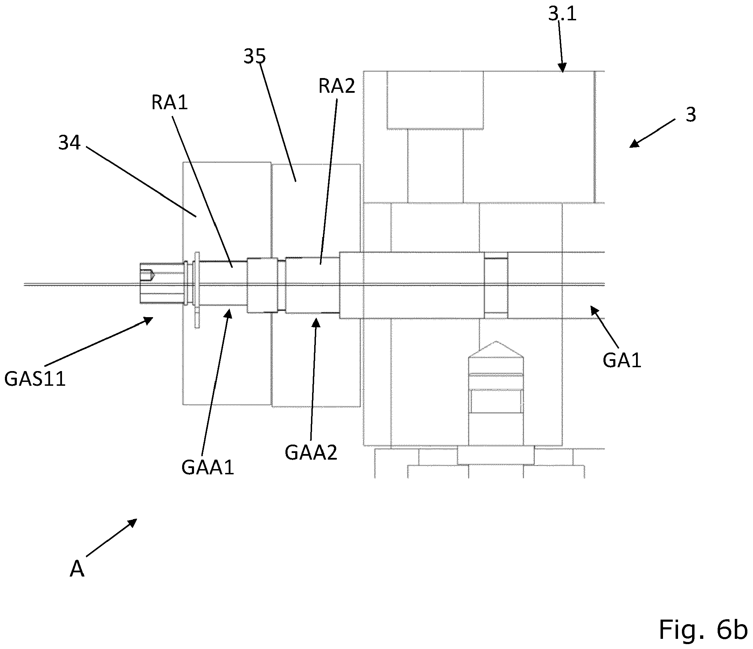

Gemäß einer in den Figuren 6a und 6b gezeigten Ausführungsvariante kann die erste und zweite Gelenkachse GA1, GA2 des Läufers 3 auch jeweils an dem ersten und zweiten freien Ende GAS11, GAS12, GAS21, GAS22 jeweils einen ersten und zweiten Gelenkachsenabschnitt GAA1, GAA2 aufweisen, wobei der erste Gelenkachsenabschnitt GAA1 eine erste Rotationsache RA1 für die jeweils erste Laufrolle 34 und 36 und der jeweils zweite Gelenkachsenabschnitt GAA2 eine zweite Rotationsachse RA2 für die jeweils zweite Laufrolle 35 und 37 ausbildet, und wobei die jeweils erste Rotationsachse RA1 versetzt, insbesondere parallel versetzt, zu der jeweils zweiten Rotationsachse RA2 verläuft.

Werden dabei auf die jeweiligen Gelenkachsenabschnitte GAA1, GAA2 Laufrollen 34...37 mit einem insbesondere identischen Außendurchmesser der Laufflächen drehbar angeordnet, so stellt sich an den Laufflächen der Laufrollen 34...37 ein Höhenversatz, bzw. eine Stufe, ein, die die Verspannung der Laufrollen 34...37 an den ersten und zweiten Anlageabschnitten 30.11, 30.21, 31.11, 31.21 weitergehen unterstützt. Die erste und zweite Gelenkachse GA1, GA2 ist in dieser Ausführungsvariante im Bereich der jeweiligen Gelenkachsenabschnitte GAA1, GAA2 damit als Exzenterachse ausgebildet.

In anderen Worten kann also beispielsweise die erste Gelenkachse GA1 an dem ersten freien Ende GAS11 den ersten und zweiten Gelenkachsenabschnitt GAA1, GAA2 aufweisen, wobei der erste Gelenkachsenabschnitt GAA1 die erste Rotationsache RA1 für die erste Laufrolle 34 und den zweiten Gelenkachsenabschnitt GAA2 der zweiten Rotationsachse RA2 für die zweite Laufrolle 35 ausbildet, und wobei die jeweils erste Rotationsachse RA1 versetzt, insbesondere parallel versetzt, zu der jeweils zweiten Rotationsachse RA2 verläuft.

Symmetrisch dazu kann die erste Gelenkachse GA1 an dem zweiten freien Ende GAS12 ebenfalls den ersten und zweiten Gelenkachsenabschnitt GAA1, GAA2 aufweisen, wobei der erste Gelenkachsenabschnitt GAA1 die erste Rotationsache RA1 für die erste Laufrolle 36 und den zweiten Gelenkachsenabschnitt GAA2 der zweiten Rotationsachse RA2 für die zweite Laufrolle 37 ausbildet, und wobei auch hier die jeweils erste Rotationsachse RA1 versetzt, insbesondere parallel versetzt, zu der jeweils zweiten Rotationsachse RA2 verläuft.

Ferner kann die zweite Gelenkachse GA2 an dem ersten freien Ende GAS21 den ersten und zweiten Gelenkachsenabschnitt GAA1, GAA2 aufweisen, wobei der erste Gelenkachsenabschnitt GAA1 die erste Rotationsache RA1 für die erste Laufrolle 34 und den zweiten Gelenkachsenabschnitt GAA2 der zweiten Rotationsachse RA2 für die zweite Laufrolle 35 ausbildet, und wobei die jeweils erste Rotationsachse RA1 versetzt, insbesondere parallel versetzt, zu der jeweils zweiten Rotationsachse RA2 verläuft.

Symmetrisch dazu kann die zweite Gelenkachse GA2 an dem zweiten freien Ende GAS22 ebenfalls den ersten und zweiten Gelenkachsenabschnitt GAA1, GAA2 aufweisen, wobei der erste Gelenkachsenabschnitt GAA1 die erste Rotationsache RA1 für die erste Laufrolle 36 und den zweiten Gelenkachsenabschnitt GAA2 der zweiten Rotationsachse RA2 für die zweite Laufrolle 37 ausbildet, und wobei auch hier die jeweils erste Rotationsachse RA1 versetzt, insbesondere parallel versetzt, zu der jeweils zweiten Rotationsachse RA2 verläuft.

Dabei kann die erste Gelenkachse GA1 und/oder zweite Gelenkachse GA2 auch bei dieser Ausführungsvariante einteilig, insbesondere einstückig ausgebildet sein, und die an ihren jeweiligen ersten und zweiten freien Enden GAS11, GAS12, GAS21, GAS22 die ersten und zweiten Gelenkachsenabschnitt GAA1, GAA2 aufweisen, bzw. ausbilden. Alternativ kann die erste Gelenkachse GA1 und/oder zweite Gelenkachse GA2 auch mehrteilig ausgebildet sein, und beispielsweise jeder erste und zweite Gelenkachsenabschnitt GAA1, GAA2 ein separates Teil bzw. Bestandteil der entsprechenden ersten bzw. zweite Gelenkachse GA1, GA2 ausbilden, die fest, jedoch vorzugsweise lösbar, miteinander verbunden sind. Vorteilhaft können die Gelenkachsen GA1, GA2 auch aus einem Vollmaterial gebildet, insbesondere hergestellt sein.

Insbesondere ist die Länge des jeweiligen ersten und zweiten Gelenkachsenabschnitts GAA1, GAA2 der ersten und zweiten Rotationsachse RA1, RA2 an die Breite der entsprechend dort aufgenommenen Laufrolle 34...37 angepasst. Mehr im Detail kann die Länge entlang der Längserstreckung des jeweiligen ersten und zweiten Gelenkachsenabschnitt GAA1, GAA2 der ersten und/oder zweiten Gelenkachse GA1, GA2 der Breite der Lauffläche der entsprechend dort angeordneten Laufrolle 34...37 entsprechen.

In anderen Worten weisen die jeweilige Gelenkachse GA1, GA2 eines entsprechendes Läufers 3 also jeweils zwei Rotationsachsen, nämlich die erste und zweite Rotationachse RA1, RA2, auf. Mehr im Detail kann die jeweils zweite Rotationsachse RA2 als axialer Lagersitz für die jeweils zweite Laufrolle 35 und 37 und die erste Rotationsachse RA1 als exzentrischer Lagersitz für die jeweils erste Laufrolle 34 und 36 ausgebildet sein. Dabei kann der parallele Abstand der zentrischen Mittellinie der ersten Rotationsachse RA1 zu der zentrischen Mittlinie der zweiten Rotationsachse RA2 zwischen 0,1mm und 0,3mm vorzugsweise 0,2 mm betragen.

Auf jeder Seite der Gelenkachsen GA1, GA2 befinden sich im Bereich der jeweiligen freien Enden GAS1, GAS2 jeweils ein Laufrollenpaar, bestehend aus einer ersten und einer zweiten Laufrolle 34 und 35 bzw. 36 und 37.

Ferner kann die jeweilige Gelenkachse GA1, GA2 an jeder Seite im Bereich der freien Enden GAS1, GAS2 jeweils eine Verspanneinrichtung VE1, VE2 zum Verspannen der jeweils ersten Laufrollen 34 und 36 gegenüber den jeweils zweiten Laufrollen 35 und 37 aufweisen. Mehr im Detail kann die jeweilige Verspanneinrichtung VE1, VE2 als Schraubverspanneinrichtung, vorzugsweise als Außensechskant-Schraubverspanneinrichtung, ausgebildet sein, die über eine Spannkraft die jeweils die auf der ersten Rotationsachse RA1 angeordneten ersten Laufrollen 34 und 36 gegen die jeweils auf der zweiten Rotationsachse RA2 angeordneten zweiten Laufrollen 35 und 37 derart verspannt, dass die Laufrollen 34...37 auf die sich gegenüberliegenden ersten und zweiten Anlageabschnitte 30.11, 30.21, 31.11, 31.21 gepresst werden. Diese Vorspannung führt zu einer Reduzierung des Lagerspiels sowie zu einer Erhöhung der Traglast. Außerdem können dadurch Ungenauigkeiten, die bei der Fertigung der Führungsschienen aufgetreten sind, ausgeglichen werden. Nach Einstellung der Vorspannung kann die jeweilige Gelenkachse GA1, GS2 in dem Läufer 3 mittels eines lösbaren Fixierelementes mechanisch fixiert, also lösbar, jedoch fest, lagebefestig werden. Dies kann beispielsweise über einen Gewindestift erfolgen.

Ferner kann der Läufer 3 an dem Grundkörper GK an einer der Oberseite 3.1 gegenüberliegenden Unterseite 3.2 vier weitere, in ihrer jeweiligen Längserstreckung lotrecht zu den ersten beiden Gelenkachsen GA1, GA2 stehende Gelenkachsen GA3, GA4, GA5 GA6 aufweisen. Insbesondere liegen dabei die dritte Gelenkachse GA3 und die vierte Gelenkachse GA4 in einer ersten Linie L1, die quer, vorzugsweise lotrecht, zur Längsrichtung der Transportstrecke TS verläuft, während die fünfte Gelenkachse GA5 und die sechste Gelenkachse GA6 in einer zweiten Linie L2 liegen, die parallel zu der ersten Linie L1 liegt. Insbesondere liegen dabei die vierte Gelenkachse GA4 und die fünfte Gelenkachse GA5 auf einer dritten Linie L3, in Längsrichtung der Transportstrecke TS verläuft, während die dritte Gelenkachse GA3 und die sechste Gelenkachse GA6 auf einer vierten Linie L4 liegen, die parallel zu der dritten Linie L3 liegt. In der Unteransicht markieren damit die dritte bis sechste Gelenkachse GA3...GA6 die Eckpunkte eines gedachten Rechtecks, das durch die Verbindungslinien in Form der ersten bis vierten Linie L1,..., L4 komplettierbar ist.

An den jeweiligen freien Enden der dritten bis sechsten Gelenkachse GA3, ... GA6 ist ebenfalls jeweils eine drehbare Laufrolle 50, 51, 52, 53 angeordnet. Die entsprechenden Laufflächen der Laufrollen 50,..., 53 verlaufen dabei senkrecht zu den Laufflächen der Laufrollen 34, ..., 37. Dabei kann die jeweilige Lauffläche sämtlicher Laufrollen 50,...,53 aus einem Kunststoff gebildet sein. Ferner können auch die Laufrollen 50,..., 53 identisch untereinander ausgebildet sein. Insbesondere ist an der dritten Gelenkachse GA3 die Laufrolle 50, an der vierten Gelenkachse GA4 die Laufrolle 51, an der fünften Gelenkachse GA5 die Laufrolle 52 und an der sechsten Gelenkachse GA6 die Laufrolle 53 drehbar um die jeweilige Gelenkachse GA3 bis GA6 aufgenommen.

Ferner vorteilhaft sind dabei sämtliche Laufrollen 50,..., 53 jeweils mittels zwei Rollenlager RL1, RL2 drehbar um die entsprechende Gelenkachse GA3, GA4, GA5 GA6 gelagert. Die jeweiligen Rollenlager RL1, RL2 sind dabei unmittelbar benachbart, vorteilhaft kontaktschlüssig benachbart, an der entsprechenden Gelenkachse GA3, GA4, GA5 GA6 angeordnet.

Ferner sind an der Unterseite 3.2 des Grundkörpers GK des Läufers 3 über ein im Querschnitt im Wesentliches U-förmiges Haltemittel 11 beidseitig sowie seitlich der Spulenelemente 9 die Permanentmagnete 8 derart gehaltert, dass die Permanentmagnete 8 einen geringen Abstand im Bereich von 1mm bis 10mm zu den Spulenelementen 9, also dem Stator 7, aufweisen, um einen Berührungskontakt einerseits zwischen dem Läufer 3 und den Spulenelementen 9 zu vermeiden und andererseits einen Spalt für den magnetischen Fluss zwischen dem permanenten Magnetfeld und dem Wanderfeld gering zu halten.

Zusätzlich an zumindest einem Haltelement 11 unterseitig des entsprechenden Permanentmagneten 8 eine Signalgeber 13 für eine Positionsermittlungseinrichtung des Läufers 3 zur Ermittlung der Position entlang der Transportstrecke TS angeordnet sein.

Dabei weist die Laufschiene 2 zumindest abschnittsweise entlang der Transportstrecke TS eine erste und zweite Führungseinrichtung 30, 31 auf, mittels der der zumindest eine Läufer 3 jeweils beidseitig mit den zwei zueinander beabstandeten und jeweils zwischen der ersten und zweiten Führungseinrichtung 30, 31 verlaufenden Gelenkachsen GA1, GA2 geführt ist.

Vorzugsweise weist die Laufschiene 2 einen als Laufschienengestell ausgebildeten Laufschienenkörper 12 zur Aufnahme bzw. Anordnung des Antriebsmoduls 5 des elektromagnetischen Antriebs 4 sowie der ersten und zweiten Führungseinrichtung 30, 31 auf. Vorzugsweise ist erste und zweite Führungseinrichtung 30, 31 entlang der Transportstrecke TS zumindest entlang der Geradenabschnitte G1, G2, vorteilhaft jedoch zusätzlich auch entlang der beiden Bogenabschnitte B1, B2 auf eines als Bogenabschnitt ausgebildeten Laufschienenmoduls 2.1 vorgesehen.

Die Gelenkachsen GA1, GA2 sind dabei jeweils an einem entsprechenden ersten freien Ende GAS11, GAS21 mit der ersten Führungs- und Lagereinrichtung 32.1, 32.2 in der ersten Führungseinrichtung 30 und an einem jeweiligen zweiten freien Ende GAS21, GAS22 mit der zweiten Führungs- und Lagereinrichtung 33.1, 33.2 in der zweiten Führungseinrichtung 31 geführt.

Wie bereits ausgeführt umfassen die ersten und zweiten Führungs- und Lagereinrichtungen 32.1, 32.2, 33.1, 33.2 jeweils wenigstens eine erste und zweite Laufrolle 34...37, die zwischen einer ersten und zweiten, einander gegenüberliegenden und parallel zu den Gelenkachsen GA1, GA2 verlaufenden Führungsfläche 30.1 und 30.2 bzw. 31.1 und 31.2 der jeweiligen Führungseinrichtung 30, 31 geführt sind.

Mehr im Detail ist die jeweils erste Laufrolle 34, 36 der ersten und zweiten Gelenkachse GA1, GA2 in einem ersten Anlageabschnitt 30.11, 31.11 der ersten Führungsfläche 30.1, 31.1 und die jeweils zweite Laufrolle 35, 37 der ersten und zweiten Gelenkachse GA1, GA2 in einem zweiten Anlageabschnitt 30.21, 31.21 der zweiten Führungsfläche 30.2, 31.2 anliegend und zueinander vorgespannt geführt.

Ferner sind der erste und zweite Anlageabschnitt 30.11 und 30.21 bzw. 31.11 und 31.21 entlang der Gelenkachsen GA1, GA2 zueinander versetzt und einander gegenüberliegend vorgesehen.

Dabei können die jeweilige erste und zweite Gelenkachse GA1, GA2 des entsprechen Läufers 3 als einteilige insbesondere einstückige Gelenkstange ausgebildet sein, die sich zwischen ihrem entsprechenden ersten und zweiten freien Ende GAS11, GAS12, GAS21, GAS22 derart erstreckt, dass der jeweilige Läufer 3 jeweils zwischen der ersten und zweiten Führungseinrichtung 30, 31 verlaufende Gelenkachsen GA1, GA2 aufweist. Die Gelenkachsen GA1, GA2 können dabei als Gelenkbolzen ausgebildet sein.

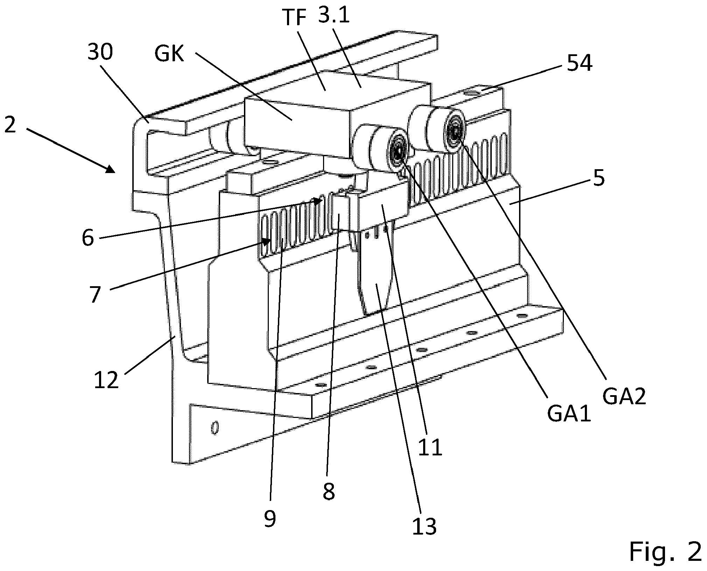

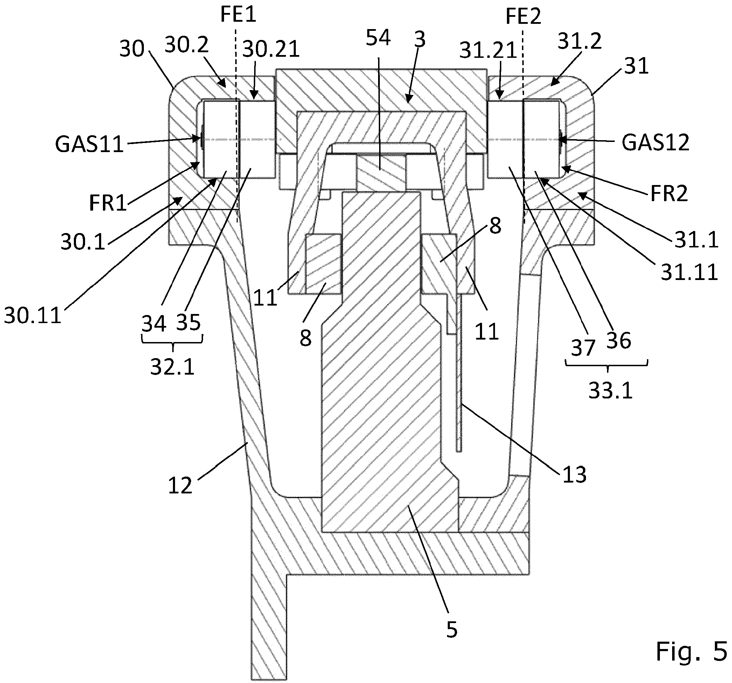

Wie insbesondere in den Figuren 2 und 5 gezeigt, sind die jeweiligen beiden freien Enden GAS11, GAS12, GAS21, GAS22 der beiden Gelenkachsen GA1, GA2 in der ersten und zweiten Führungseinrichtung 30, 31 in zwei gegenüberliegenden und parallel zur Transportrechte TS orientierten Führungsebenen FE1, FE2 geführt. Mithin bildet die erste und zweite Führungseinrichtung 30, 31 in der Ausführungsvarianten der Figuren 2 und 5 damit eine horizontale Führung für die jeweilige Gelenkachsen GA1, GA2 eines entsprechenden Läufers 3 aus.

Somit ist die jeweils erste und zweite Laufrolle 34...37 der jeweiligen ersten und zweiten Führungs- und Lagereinrichtung 32, 33 der beiden Gelenkachsen GA1, GA2 zwischen den jeweiligen Führungsfläche 30.1, 30.2 bzw. 31.1, 31.2 der entsprechenden ersten bzw. zweiten Führungseinrichtung 30, 31 parallel der Transportstrecke TS A geführt und damit insbesondere lotrecht der Führungsebenen FE1 und FE2.

Dabei kann vorgesehen sein, dass bezogen auf die Längserstreckung der jeweiligen Gelenkachse GA1, GA2 die jeweils erste Laufrolle 34 der ersten Führungs- und Lagereinrichtung 32 eine erste, äußere Laufrolle 34 und die jeweils zweite Laufrolle 35 eine zweite innere Laufrolle 35 ausbildet, die entlang der jeweiligen Gelenkachse GA1, GA2 um näherungsweise die Breite der jeweils ersten äußeren Laufrolle 34 in Richtung des jeweils zweiten freien Endes GAS21, GAS22 versetzt an der entsprechenden Gelenkachse GA1, GS2 unmittelbar benachbart der ersten äußeren Laufrolle 34 vorgesehen ist.

Auf Grund des spiegelsymmetrischen Aufbaus des Läufers 3 ist die entsprechende erste Laufrolle 36 der zweiten Führungs- und Lagereinrichtung 33 im Bereich des jeweiligen zweiten freien Endes GAS21, GAS22 um die entsprechende Gelenkachse GA1, GA2 drehbar vorgesehen, während die entsprechende zweite Laufrolle 37 auf der dem entsprechenden ersten freien Ende GAS11, GAS12 zugewandten Seite der entsprechenden ersten Laufrolle 36 ebenfalls um die zugehörige Gelenkachse GA1, GA2 drehbar vorgesehen und zwar der entsprechenden ersten Laufrolle 36 vorzugsweise unmittelbar benachbart anschließend, beispielweise kontaktschlüssig anschließend. In diesem Zusammenhang gilt es anzumerken, dass aufgrund des symmetrischen Aufbaus des Läufers 3 sämtliche im Zusammenhang der ersten Gelenkachse GA1 getroffenen Erläuterungen oder Darstellungen in den Figuren "Mutatis Mutandis" - also analog - auch für die zweite Gelenkachse GA2 zutreffen.

Dies bedeutet insbesondere bezogen auf die Längserstreckung der beiden Gelenkachse GA1, GA2, dass damit die jeweilige erste Laufrolle 36 der zweiten Führungs- und Lagereinrichtung 33 eine erste äußere Laufrolle 36 und die jeweilige zweite Laufrolle 37 eine zweite innere Laufrolle 37 ausbildet, die entlang der entlang der jeweiligen Gelenkachse GA1, GA2 um näherungsweise die Breite der jeweiligen ersten äußeren Laufrolle 36 in Richtung des jeweiligen ersten freien Endes GAS11, GAS21 versetzt an der entsprechenden Gelenkachse GA1, GA2 unmittelbar benachbart der entsprechenden ersten äußeren Laufrolle 36 vorgesehen ist.

Vorteilhaft ist die jeweilige erste Laufrolle 34 der ersten Führungs- und Lagereinrichtung 32 an dem ersten Anlageabschnitt 30.11 der ersten Führungsfläche 30.1 anliegend gegen die an dem zweiten Anlageabschnitt 30.21 der zweiten Führungsfläche 30.2 jeweils anliegende zweite Laufrolle 35 in der ersten Führungseinrichtung 30 vorgespannt geführt und die jeweils erste Laufrolle 36 der zweiten Führungs- und Lagereinrichtung 33 an dem ersten Anlageabschnitt 31.11 der ersten Führungsfläche 31.1 anliegend gegen die jeweilige an dem zweiten Anlageabschnitt 31.21 der zweiten Führungsfläche 31.2 anliegende zweite Laufrolle 37 in der zweiten Führungseinrichtung 31 vorgespannt geführt.

Ferner vorteilhaft ist die jeweilige erste Laufrolle 34 der jeweiligen ersten Führungs- und Lagereinrichtung 32 an dem ersten Anlageabschnitt 30.11 der ersten Führungsfläche 30.1 anliegend und die an dem zweiten Anlageabschnitt 30.21 der zweiten Führungsfläche 30.2 anliegende jeweilige zweite Laufrolle 35 in der ersten Führungseinrichtung 30 vorgespannt geführt gegenüber den an dem ersten Anlageabschnitt 31.11 der ersten Führungsfläche 31.1 anliegenden jeweiligen ersten Laufrollen 36 der entsprechenden zweiten Führungs- und Lagereinrichtung 33 und den an dem zweiten Anlageabschnitt 31.21 der zweiten Führungsfläche 31.2 anliegend geführten jeweiligen zweiten Laufrollen 37 der entsprechenden zweiten Führungseinrichtung 31.

Durch die vorgespannte Führung der jeweiligen Gelenkachse GA1 und GA2 in der ersten und zweiten Führungseinrichtung 30, 31 wirken im Bereich der entsprechenden ersten Führungs- und Lagereinrichtung 32 jeweils von dem ersten bzw. zweiten Anlageabschnitt 30.11, 30.21 der ersten Führungseinrichtung 30 lotrecht auf die entsprechenden Gelenkachsen GA1 und GA2 gerichtete Vorspannkräfte, die somit entlang der jeweiligen Gelenkachse GA1, GA2 versetzt und gegenüberliegend, also aufeinander zu gerichtet sind und damit ein Verspannen der entsprechend ersten Führungs- und Lagereinrichtung 32 entlang der Längserstreckung der zugehörigen Gelenkachse GA1, GA2 in der entsprechend ersten Führungseinrichtung 30 gegenüber der in der jeweiligen zweiten Führungseinrichtung 31 geführten jeweiligen zweiten Führungs- und Lagereinrichtung 33 sicherstellen, während im Bereich der jeweiligen zweiten Führungs- und Lagereinrichtung 33 jeweils von dem ersten bzw. zweiten Anlageabschnitt 31.11, 31.21 der zweiten Führungseinrichtung 31 lotrecht auf die entsprechende Gelenkachse GA1, GA2 gerichtete Vorspannkräfte, die somit entlang der jeweiligen Gelenkachse GA1, GA2 versetzt und gegenüberliegend, also aufeinander zu gerichtet sind und damit ein Verspannen jeweiligen zweiten Führungs- und Lagereinrichtung 33 entlang der Längserstreckung der zugehörigen Gelenkachse GA1, GA2 in der jeweiligen zweiten Führungseinrichtung 31 gegenüber der in der ersten Führungseinrichtung 30 geführten entsprechenden ersten Führungs- und Lagereinrichtung 32 sicherstellt.

Die erste Führungseinrichtung 30 bildet hierfür zwischen der ersten und zweiten Führungsfläche 30.1, 30.2 einen ersten Führungsraum FR1 aus, der im Bereich der ersten und zweiten Anlagefläche 30.11, 30.21 in den ersten Führungsraum FR1 zurückspringt, also in diesem Bereich gestuft ausgebildet ist, derart, dass die entsprechend erste Laufrolle 34 der jeweils zugehörigen ersten Führungs- und Lagereinrichtung 32 an der ersten Führungsfläche 30.1 im Bereich des in den ersten Führungsraum FR1 zurückspringenden ersten Anlageabschnitt 30.11 anliegt und die entsprechende zweite Laufrolle 35 an der zweiten Führungsfläche 30.2 im Bereich des in den ersten Führungsraum FR1 zurückspringenden zweiten Anlageabschnittes 30.21 anliegt, während die jeweilige zweite Laufrolle 35 der jeweils zugehörigen ersten Führungs- und Lagereinrichtung 32 an dem nicht in ersten den Führungsraum FR1 zurückspringenden Teilabschnitt von der ersten Führungsfläche 30.1 frei kommt, also insbesondere nicht anliegt und die jeweilige erste Laufrolle 34 von dem nicht in den ersten Führungsraum FR1 zurückspringenden Teilabschnitt der zweiten Führungsfläche 30.2 freikommt.

Zudem bildet auch die zweite Führungseinrichtung 31 zwischen der ersten und zweiten Führungsfläche 31.1, 31.2 einen zweiten Führungsraum FR2 aus, der im Bereich der ersten und zweiten Anlagefläche 31.11, 31.21 in den zweiten Führungsraum FR2 zurückspringt, also in diesem Bereich gestuft ausgebildet ist, derart, dass die entsprechend erste Laufrolle 36 der jeweils zugehörigen zweiten Führungs- und Lagereinrichtung 33 an der ersten Führungsfläche 31.1 im Bereich des in den zweiten Führungsraum FR2 zurückspringenden ersten Anlageabschnitt 31.11 anliegt und die entsprechend zweite Laufrolle 37 an der zweiten Führungsfläche 31.2 im Bereich des in den zweiten Führungsraum FR2 zurückspringenden zweiten Anlageabschnittes 31.21 anliegt, während die jeweilige zweite Laufrolle 37 der jeweils zugehörigen zweiten Führungs- und Lagereinrichtung 33 an dem nicht in zweiten den Führungsraum FR2 zurückspringenden Teilabschnitt von der ersten Führungsfläche 31.1 frei kommt, also insbesondere nicht anliegt und die jeweilige erste Laufrolle 36 von dem nicht in den zweiten Führungsraum FR2 zurückspringenden Teilabschnitt der zweiten Führungsfläche 31.2 freikommt.

Wird ein entsprechender Läufer 3 entlang der Transportstrecke TS bewegt, so drehen sich die jeweiligen ersten und zweiten Laufrollen 34...37 hierdurch jeweils gegensinnig zueinander um die durch die Gelenkachsen GA1, GA2 gebildeten Drehachsen. Die gegensinnige Drehung der jeweiligen ersten Laufrollen 34, 36 der ersten und zweiten Gelenkachse GA1, GA2 zu den jeweiligen zweiten Laufrolle 35, 37 entsteht durch die jeweils gestufte Ausbildung der entsprechenden ersten und zweiten Führungsräume FR1, FR2, so dass sich die ersten Laufrollen 34, 36 nur an dem ersten Anlageabschnitt, 30.11, 31.11 der jeweiligen ersten Führungsfläche 30.1, 31.1 und die zweiten Laufrollen 35, 37 nur an dem zweiten Anlagenabschnitt 30.21, 31.21 der jeweiligen zweiten Führungsfläche 30.2, 31.2 anliegend abrollen bzw. abwälzen.

Ferner ist an der Oberseite des Antriebsmoduls 5 entlang dessen Längserstreckung eine Führungsschiene 54 vorgesehen, die mit den der Unterseite 3.2 des Läufers 3 angeordneten Laufrollen 50,..., 53 in Wirkeingriff steht. Die Führungsschiene 54 kann dabei im Wesentlichen rechteckig ausgebildet sein und eine Länge in Längserstreckung aufweisen, die im Wesentlichen der Länge eines Antriebsmoduls 5 entspricht. Insbesondere kann die Führungsschiene 54 fest, jedoch lösbar, mit der Oberseite bzw. an der Oberseite des Antriebsmoduls 5 verschraubt sein, das seinerseits wiederum mit seiner Unterseite mit dem Laufschienenkörper 12 fest, jedoch lösbar, verbunden, insbesondere verschraubt sein kann.

Dabei bildet die Führungsschiene 54 insbesondere eine seitliche Führung für den Läufer 3 aus, der sich während seiner Bewegung beidseitig sowie kontaktschlüssig entlang der Transportstrecke TS mit seinen Laufrollen 50...53 an der Führungsschiene 54 entlang rollt bzw. an dieser abwälzt.

In anderen Worten ist also zur vertikalen Führung der des Läufers 3 zwischen der ersten und zweiten Führungseinrichtung 30, 31 sowie zwischen den Laufrollen 50, ... 53 die Führungsschiene 54 vorgesehen, die an der Oberseite des Antriebsmoduls 5 angeordnet ist.

### Bezugszeichenliste

- 1: Transportsystem
- 2: Laufschiene
- 2.1: Laufschienenmodul
- 3: Läufer
- 3.1: Oberseite
- 3.2: Unterseite
- 4: elektromagnetischer Antrieb
- 5: Antriebsmodul
- 6: Linearmotor
- 7: Stator
- 8: Permanentmagnet
- 9: Spulenelement
- 11: Haltemittel
- 12: Laufschienenkörper
- 13: Signalgeber
- 15: mechanischer Antrieb
- 15.1: Transportelement
- 15.2: Mitnehmer
- 15.3: Umlenkeinrichtung

- 30: erste Führungseinrichtung
- 30.1: erste Führungsfläche
- 30.11: erster Anlageabschnitt
- 30.2: zweite Führungsfläche
- 30.21: zweiter Anlageabschnitt
- 31: zweite Führungseinrichtung
- 31.1: erste Führungsfläche
- 31.11: erster Anlageabschnitt
- 31.2: zweite Führungsfläche
- 31.21: zweiter Anlageabschnitt
- 32.1, 32.2: erste Führungs- und Lagereinrichtung
- 33.1, 33.2: zweite Führungs- und Lagereinrichtung
- 34...37: Laufrolle

- 50...53: Laufrolle
- 54: Führungsschiene
- G1, G2: Geradenabschnitt
- B1, B2: Bogenabschnitt
- GK: Grundkörper
- GA1, GA2: Gelenkachse
- GA3...GA6: Gelenkachse
- GAA1, GAA2: erster und zweiter Gelenkachsenabschnitt
- GAS11, GAS21: erstes freies Ende
- GAS12, GAS22: zweites freies Ende
- FE1: erste Führungsebene
- FE2: zweite Führungsebene
- FR1: erster Führungsraum
- FR2: zweiter Führungsraum
- TS: Transportstrecke
- TS1: erster Transportstreckenabschnitt
- TS2: zweiter Transportstreckenabschnitt
- TF: Transportfläche
- RL1, RL2: Rollenlager
- L1...L4: Linie
- RA1, RA2: erste und zweite Rotationsachse

## Patentansprüche

1. Transportsystem (1) zur Beförderung von Gegenständen entlang einer Transportstrecke (TS), wobei die Transportstrecke (TS) aus zumindest einem ersten Transportstreckenabschnitt (TS1) und zumindest einem zweiten Transportstreckenabschnitt (TS2) gebildet ist,
wobei das Transportsystem (1) wenigstens eine ortsfeste Laufschiene (2) und zumindest einen entlang der Laufschiene (2) bewegbaren Läufer (3) zum Befördern der Gegenstände entlang der Transportstrecke (TS) umfasst,
ferner umfassend einen elektromagnetischen Antrieb (4) zum Antreiben des zumindest einen Läufers (3) entlang des ersten Transportstreckenabschnittes (TS1) mittels elektromagnetischer Kräfte, wobei der elektromagnetische Antrieb (4) eine Vielzahl von ortsfesten Spulenelementen (9) und zumindest einen Permanentmagneten (8) aufweist,
wobei die ortsfesten Spulenelemente (9) des elektromagnetischen Antriebs (4) an der ortsfesten Laufschiene (2) ausschließlich entlang des ersten Transportstreckenabschnittes (TS1) vorgesehen sind und der zumindest eine Permanentmagnet (8) an dem zumindest einen Läufer (3) vorgesehen ist, und wobei das Transportsystem (1) einen mechanischen Antrieb (15) zum Antreiben des zumindest einen Läufers (3) entlang des zweiten Transportstreckenabschnittes (TS2) mittels mechanischer Kräfte aufweist, **dadurch gekennzeichnet, dass** die Laufschiene (2) zumindest abschnittsweise entlang des ersten und/oder des zweiten Transportstreckenabschnittes (TS1, TS2) eine erste und zweite Führungseinrichtung (30, 31) aufweist, mittels der der zumindest eine Läufer (3) jeweils beidseitig mit zwei zueinander beabstandeten und jeweils zwischen der ersten und zweiten Führungseinrichtung (30, 31) verlaufenden Gelenkachsen (GA1, GA2) geführt ist, wobei die Gelenkachsen (GA1, GA2) jeweils an einem ersten freien Ende (GAS11, GAS21) mit einer ersten Führungs- und Lagereinrichtung (32.1, 32.2) in der ersten Führungseinrichtung (30) und an einem jeweiligen zweiten freien Ende (GAS12, GAS22) mit einer zweiten Führungs- und Lagereinrichtung (33.1, 33.2) in der zweiten Führungseinrichtung (31) geführt sind, wobei die ersten und zweiten Führungs- und Lagereinrichtungen (32.1, 32.2, 33.1, 33.2) jeweils wenigstens eine erste und zweite Laufrolle (34...37) umfassen, die zwischen einer ersten und zweiten, einander gegenüberliegenden und parallel zu den Gelenkachsen (GA1, GA2) verlaufenden Führungsfläche (30.1 und 30.2 bzw. 31.1 und 31.2) der jeweiligen Führungseinrichtung (30, 31) geführt sind, wobei die jeweils erste Laufrolle (34, 36) in einem ersten Anlageabschnitt (30.11, 31.11) der ersten Führungsfläche (30.1, 31.1) und die jeweils zweite Laufrolle (35, 37) in einem zweiten Anlageabschnitt (30.21, 31.21) der zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Gelenkachsen (GA1, GA2) zueinander versetzt und einander gegenüberliegend sind, und die erste und/oder zweite Gelenkachse (GA1, GA2) des Läufers (3) jeweils an dem ersten und zweiten freien Ende (GAS11, GAS12, GAS21, GAS22) einen ersten und zweiten Gelenkachsenabschnitt (GAA1, GAA2) aufweist, wobei der erste Gelenkachsenabschnitt (GAA1) eine erste Rotationsache (RA1) für die jeweils erste Laufrolle (34 und 36) und der jeweils zweite Gelenkachsenabschnitt (GAA2) eine zweite Rotationsachse (RA2) für die jeweils zweite Laufrolle (35 und 37) ausbildet, und wobei die jeweils erste Rotationsachse (RA1) versetzt, insbesondere parallel versetzt, zu der jeweils zweiten Rotationsachse (RA2) verläuft und/oder dass die erste und/oder die zweite Gelenkachse (GA1, GA2) im Bereich der jeweiligen Gelenkachsenabschnitte (GAA1, GAA2) als Exzenterachse ausgebildet ist.

2. Transportsystem (1) nach Anspruch 1, **dadurch gekennzeichnet, dass** die Transportstrecke (TS) mit einem ersten und zweiten Bogenabschnitt (B1, B2) und einem ersten und zweiten Geradenabschnitt (G1, G1) endlos umlaufend ausgebildet ist, wobei der erste Transportstreckenabschnitt (TS1) zumindest an dem ersten Geradenabschnitt (G1) vorgesehen ist und/oder dass der zweite Transportstreckenabschnitt (TSA2) zumindest an dem zweiten Geradenabschnitt (G2) sowie zumindest abschnittsweise an dem ersten und zweiten Bogenabschnitt (B1, B2) ausgebildet ist und/oder dass der erste Transportstreckenabschnitt (TSA1) der Transportstrecke (TS) durch den ersten Geradenabschnitt (G1) gebildet ist und der zweite Transportstreckenabschnitt (TS2) durch die beiden Bogenabschnitte (B1, B2) und den diese Bogenabschnitte (B1, B2) verbindenden zweiten Geradenabschnitt (G2) gebildet ist.

3. Transportsystem (1) nach Anspruch 2, **dadurch gekennzeichnet, dass** entlang des als ersten Geradenabschnitt (G1) ausgebildeten ersten Transportstreckenabschnittes (TS1) der elektromagnetische Antrieb (3) zum Antreiben des zumindest einen Läufers (2) mittels elektromagnetischer Kräfte vorgesehen ist und/oder entlang des als die beiden Bogenabschnitte (B1, B2) und des diese Bogenabschnitte (B1, B2) verbindenden zweiten Geradenabschnittes (G2) ausgebildeten zweiten Transportstreckenabschnitt (TS2) der mechanische Antrieb (15) zum Antreiben des zumindest einen Läufers (2) mittels mechanischer Kräfte vorgesehen ist.

4. Transportsystem (1) nach Anspruch 1, **dadurch gekennzeichnet, dass** die jeweiligen beiden freien Enden (GAS11, GAS12; GAS21, GAS22) der beiden Gelenkachsen (GA1 und GA2) in der ersten und zweiten Führungseinrichtung (30, 31) in zwei gegenüberliegend und parallel zur Transportstrecke (TS) orientierten Führungsebenen (FE1, FE2) geführt sind und/oder dass die jeweilige erste und zweite Laufrolle (34, 35) der entsprechend ersten Führungs- und Lagereinrichtung (32.1, 32.2) um die jeweilige Gelenkachse (GA1, GA2) drehbar und unmittelbar benachbart an dieser im Bereich des jeweiligen ersten freien Endes (GAS11, GAS21) vorgesehen sind und/oder dass die jeweilige erste und zweite Laufrolle (36, 37) der entsprechenden zweiten Führungs- und Lagereinrichtung (33.1, 33.2) um die jeweilige Gelenkachse (GA1, GA2) drehbar und unmittelbar benachbart an dieser im Bereich des jeweiligen zweiten freien Endes (GAS12; GAS22) vorgesehen sind.

5. Transportsystem (1) nach einem der vorangehenden Ansprüche, **dadurch gekennzeichnet, dass** die jeweilige erste Laufrolle (34) der ersten Führungs- und Lagereinrichtung (32.1, 32.2) an dem ersten Anlageabschnitt (30.11) der ersten Führungsfläche (30.1) anliegend gegen die an dem zweiten Anlageabschnitt (30.21) der zweiten Führungsfläche (30.2) jeweils anliegende zweite Laufrolle (35) in der ersten Führungseinrichtung (30) vorgespannt geführt ist und die jeweils erste Laufrolle (36) der zweiten Führungs- und Lagereinrichtung (33.1, 33.2) an dem ersten Anlageabschnitt (31.11) der ersten Führungsfläche (31.1) anliegend gegen die jeweilige an dem zweiten Anlageabschnitt (31.21) der zweiten Führungsfläche (31.2) anliegende zweite Laufrolle (37) in der zweiten Führungseinrichtung (31) vorgespannt geführt ist und/oder dass die jeweilige erste und zweite Laufrolle (34, 35) der ersten Führungs- und Lagereinrichtung (32.1, 32.2) der entsprechenden Gelenkachse (GA1, GA2) vorgespannt gegenüber der jeweiligen ersten und zweiten Laufrolle (36, 37) der zweiten Führungs- und Lagereinrichtung (33) der entsprechenden Gelenkachse (GA1, GA2) geführt sind.

6. Transportsystem (1) nach einem der vorangehenden Ansprüche 1 bis 3, **dadurch gekennzeichnet, dass** die erste Führungseinrichtung (30) zwischen der ersten und zweiten Führungsfläche (30.1, 30.2) einen ersten Führungsraum (FR1) aufweist, der im Bereich der ersten und zweiten Anlagefläche (30.11, 30.21) in den ersten Führungsraum (FR1) zurückspringt, indem der erste Führungsraum (FR1) in diesem Bereich gestuft ausgebildet ist und/oder dass die zweite Führungseinrichtung (31) zwischen der ersten und zweiten Führungsfläche (31.1, 31.2) einen zweiten Führungsraum (FR2) aufweist, der im Bereich der ersten und zweiten Anlagefläche (31.11, 31.21) in den zweiten Führungsraum FR2 zurückspringt, indem der zweite Führungsraum (FR2) in diesem Bereich gestuft ausgebildet ist.

7. Transportsystem (1) nach einem der vorangehenden Ansprüche, **dadurch gekennzeichnet, dass** die Laufrollen (34...37) identisch zueinander ausgebildete Außendurchmesser aufweisen und/oder dass sämtliche Laufrollen (34...37) jeweils mittels zwei Rollenlager (RL1, RL2) drehbar um die entsprechende Gelenkachse (GA1, GA2) gelagert sind.

8. Transportsystem (1) nach einem der vorangehenden Ansprüche, **gekennzeichnet durch** mehrere unabhängig und autonom zueinander entlang der Transportstrecke (TS) bewegbare Läufer (3), wobei der elektromagnetische Antrieb (4) als Linearantrieb, vorzugsweise als Langstator-Linearantrieb ausgebildet ist.

9. Transportsystem (1) nach einem der vorangehenden Ansprüche, **dadurch gekennzeichnet, dass** der Läufer (3) an einer, einerOberseite (3.1) gegenüberliegenden Unterseite (3.2) zumindest vier weitere, in ihrer jeweiligen Längserstreckung lotrecht zu den ersten beiden Gelenkachsen (GA1, GA2) stehende Gelenkachsen (GA3, GA4, GA5 GA6) aufweist, die sich paarweise entlang einer Führungsschiene (54) gegenüberliegen und/oder dass sämtliche Laufrollen (50, 51, 52, 53) identisch untereinander, sowie vorzugsweise identisch zu den Laufrollen (34...37) ausgebildet sind und/oder dass sämtliche Laufrollen (50, 51, 52, 53) jeweils mittels zwei Rollenlager (RL1, RL2) drehbar um die entsprechende Gelenkachse (GA3, GA4, GA5 GA6) gelagert sind.

10. Transportsystem (1) nach einem der vorangehenden Ansprüche, **dadurch gekennzeichnet, dass** die Führungsschiene (54) an der Oberseite eines Antriebsmoduls (5) der Laufschiene (2) entlang dessen Längserstreckung vorgesehen ist und die mit den an der Unterseite (3.2) des Läufers (3) angeordneten Laufrollen (50, 51, 52, 53) in Wirkeingriff steht und/oder dass die Führungsschiene (54) eine seitliche Führung für den Läufer (3) ausbildet, der sich während seiner Bewegung beidseitig sowie kontaktschlüssig entlang der Transportstrecke (TS) mit seinen Laufrollen (50, 51, 52, 53) an der Führungsschiene (54) entlang rollt bzw. an dieser abwälzt.

11. Transportsystem (1) nach einem der vorangehenden Ansprüche, **dadurch gekennzeichnet, dass** der mechanische Antrieb (15) zum Antreiben des zumindest einen Läufers (2) mittels mechanischer Kräfte ein entlang der Transportstrecke (TS) endlos umlaufendendes, motorisch angetriebenes Transportelement (15.1) aufweist, an dem mehrere Mitnehmer (15.2) angeordnet sind, die sich mit dem Transportelement (15.1) mitbewegen und wobei die Mitnehmer (15.2) ausschließlich entlang des zweiten Transportstreckenabschnittes (TS2) in schiebendem Wirkeingriff mit dem zumindest einen Läufer (2) stehen.

12. Transportsystem (1) nach einem der vorangehenden Ansprüche, **dadurch gekennzeichnet, dass** der mechanische Antrieb (15) mehrere Umlenkeinrichtungen (15.3), beispielsweise in Form von Umlenkrollen, aufweist, die das innerhalb der Laufschiene (2) endlos umlaufende Transportelement (15.1) derart führen und umlenken, dass die mit dem Transportelement (15.1) mitbewegten Mitnehmer (15.2) ausschließlich im Bereich des zweiten Transportstreckenabschnittes (TS2) mit dem zumindest einen Läufer (2) in mechanischem Wirkeingriff stehen.

13. Transportsystem (1) nach einem der vorangehenden Ansprüche, **dadurch gekennzeichnet, dass** der mechanische Antrieb (15) als Riemenantrieb ausgebildet ist, der mehrere an einem als Riemen ausgebildeten Transportelement (15.1) angeordnete Mitnehmer (15.2) aufweist, die entlang des zweiten Transportstreckenabschnittes (TS2) in schiebendem Wirkeingriff mit dem zumindest einen Läufer (2) stehen und/oder dass der jeweilige Mitnehmer (15.2) des als Riemen ausgebildeten Transportelementes (15.1) in mechanischem Wirkeingriff mit dem Signalgeber (13) des zumindest einen Läufers (2) steht, indem der Mitnehmer (15.2) den zumindest einen Läufer (2) am Signalgeber (13) entlang des zweiten Transportstreckenabschnittes (TS2) in Transportrichtung anschiebt.

## Claims

1. Transport system (1) for conveying objects along a transport route (TS), wherein the transport route (TS) is formed from at least one first transport route section (TS1) and at least one second transport route section (TS2),
wherein the transport system (1) comprises at least a stationary running rail (2) and at least a runner (3) movable along the running rail (2) for conveying the objects along the transport route (TS),
further comprising an electromagnetic drive (4) for driving the at least one runner (3) along the first transport route section (TS1) by means of electromagnetic forces, wherein the electromagnetic drive (4) comprises a plurality of stationary coil elements (9) and at least one permanent magnet (8),
wherein the stationary coil elements (9) of the electromagnetic drive (4) are provided on the stationary running rail (2) exclusively along the first transport route section (TS1) and the at least one permanent magnet (8) is provided on the at least one runner (3), and wherein the transport system (1) comprises a mechanical drive (15) for driving the at least one runner (3) along the second transport route section (TS2) by means of mechanical forces, **characterized in that** the running rail (2) comprises at least in sections along the first and/or the second transport route section (TS1, TS2) a first and a second guide device (30, 31), by means of which the at least one runner (3) is guided on both sides, respectively, with two joint axes (GA1, GA2) which are spaced apart from one another and each run between the first and second guide device (30, 31), wherein the joint axes (GA1, GA2) are each guided at a first free end (GAS11, GAS21) with a first guide and bearing device (32.1, 32.2) in the first guide device (30) and at a respective second free end (GAS12, GAS22) with a second guide and bearing device (33.1, 33.2) in the second guide device (31), wherein the first and second guide and bearing devices (32.1, 32.2, 33.1, 33.2) each comprise at least one first and second roller (34...37) which are guided between a first and second guide surface (30.1 and 30.2 or 31.1 and 31.2) of the respective guide device (30, 31) running opposite one another and parallel to the joint axes (GA1, GA2), wherein the respective first roller (34, 36) abuts against a first contact section (30.11, 31.11) of the first guide surface (30.1, 31.1) and the respective second roller (35, 37) abuts against a second contact section (30.21, 31.21) of the second guide surface (30.2, 31.2) and which are guided in a pre-tensioned manner with respect to one another, wherein the first and second contact sections (30.11 and 30.21 or 31.11 and 31.21) are offset with respect to one another along the joint axes (GA1, GA2) and are opposite one another, and wherein the first and/or second joint axis (GA1, GA2) of the runner (3) comprises a first and second joint axis section (GAA1, GAA2) at the first and second free ends (GAS11, GAS12, GAS21, GAS22), wherein the first joint axis section (GAA1) forms a first axis of rotation (RA1) for the respective first roller (34 and 36) and the respective second joint axis section (GAA2) forms a second axis of rotation (RA2) for the respective second roller (35 and 37), and wherein the respective first axis of rotation (RA1) runs offset, in particular offset parallel, to the respective second axis of rotation (RA2) and/or that the first and/or the second joint axis (GA1, GA2) is configured as an eccentric axis in the region of the respective joint axis sections (GAA1, GAA2).

2. Transport system (1) according to claim 1, **characterized in that** the transport route (TS) is configured to be endless with a first and second curved section (B1, B2) and a first and second straight section (G1, G1), wherein the first transport route section (TS1) is provided at least on the first straight section (G1) and/or **in that** the second transport route section (TSA2) is formed at least on the second straight section (G2) and at least in sections on the first and second curved sections (B1, B2) and/or **in that** the first transport route section (TSA1) of the transport route (TS) is formed by the first straight section (G1) and the second transport route section (TS2) is formed by the two curved sections (B1, B2) and the second straight section (G2) connecting these curved sections (B1, B2).

3. Transport system (1) according to claim 2, **characterized in that** the electromagnetic drive (3) for driving the at least one runner (2) by means of electromagnetic forces is provided along the first transport route section (TS1) configured as the first straight section (G1) and/or the mechanical drive (15) for driving the at least one runner (2) by means of mechanical forces is provided along the second transport route section (TS2) configured as the two curved sections (B1, B2) and the second straight section (G2) connecting these curved sections (B1, B2).

4. Transport system (1) according to claim 1, **characterized in that** the respective two free ends (GAS11, GAS12; GAS21, GAS22) of the two joint axes (GA1 and GA2) in the first and second guide device (30, 31) are guided in two guide planes (FE1, FE2) opposite one another and oriented parallel to the transport route (TS) and/or **in that** the respective first and second rollers (34, 35) of the corresponding first guide and bearing device (32.1, 32.2) are provided so as to be rotatable about the respective joint axis (GA1, GA2) and are immediately adjacent thereto in the region of the respective first free end (GAS11, GAS21) and/or **in that** the respective first and second rollers (36, 37) of the corresponding second guide and bearing device (33.1, 33.2) are provided so as to be rotatable about the respective joint axis (GA1, GA2) and are immediately adjacent thereto in the region of the respective second free end (GAS12; GAS22).

5. Transport system (1) according to one of the preceding claims, **characterized in that** the respective first roller (34) of the first guide and bearing device (32.1, 32.2), abutting against the first contact section (30.11) of the first guide surface (30.1) is guided in a pre-tensioned manner against the respective second roller (35) abutting against the second bearing section (30.21) of the second guide surface (30.2) in the first guide device (30) and the respective first roller (36) of the second guide and bearing device (33.1, 33.2), abutting against against the first contact section (31.11) of the first guide surface (31.1) is guided in a pre-tensioned manner against the respective second roller (37) abutting against the second contact section (31.21) of the second guide surface (31.2) in the second guide device (31) and/or **in that** the respective first and second rollers (34, 35) of the first guide and bearing device (32.1, 32.2) of the corresponding joint axis (GA1, GA2) are guided in a pre-tensioned manner relative to the respective first and second rollers (36, 37) of the second guide and bearing device (33) of the corresponding joint axis (GA1, GA2).

6. Transport system (1) according to one of the preceding claims 1 to 3, **characterized in that** the first guide device (30) comprises a first guide space (FR1) between the first and second guide surfaces (30.1, 30.2), which is recessed into the first guide space (FR1) in the region of the first and second contact surfaces (30.11, 30.21) whereby the first guide space (FR1) is configured to be stepped in this region and/or in that the second guide device (31) comprises a second guide space (FR2) between the first and second guide surfaces (31.1, 31.2), which is recessed into the second guide space (FR2) in the region of the first and second contact surfaces (31.11, 31.21) whereby the second guide space (FR2) is configured to be stepped in this region.

7. Transport system (1) according to one of the preceding claims, **characterized in that** the rollers (34...37) comprise outer diameters configured to be identical to one another and/or **in that** all rollers (34...37) are each mounted by means of two roller bearings (RL1, RL2) so as to be rotatable about the corresponding joint axis (GA1, GA2).

8. Transport system (1) according to one of the preceding claims, **characterized by** a plurality of runners (3) which can be moved independently and autonomously with respect to one another along the transport route (TS), wherein the electromagnetic drive (4) is configured as a linear drive, preferably as a long stator linear drive.

9. Transport system (1) according to one of the preceding claims, **characterized in that** the runner (3) comprises at least four further joint axes (GA3, GA4, GA5 GA6) on an underside (3.2) opposite the top side (3.1), which are perpendicular to the first two joint axes (GA1, GA2) in their respective longitudinal extension and which are arranged opposite one another in pairs along a guide rail (54) and/or **in that** all rollers (50, 51, 52, 53) are configured to be identical to one another and preferably identical to the rollers (34...37) and/or **in that** all the rollers (50, 51, 52, 53) are each mounted by means of two roller bearings (RL1, RL2) so as to be rotatable about the corresponding joint axis (GA3, GA4, GA5 GA6).

10. Transport system (1) according to one of the preceding claims, **characterized in that** the guide rail (54) is provided on the upper side of a drive module (5) of the running rail (2) along its longitudinal extension and is in operative engagement with the rollers (50, 51, 52, 53) arranged on the underside (3.2) of the runner (3) and/or **in that** the guide rail (54) forms a lateral guide for the runner (3), which rolls or passes along the guide rail (54) on both sides and in contact with the transport route (TS) with its rollers (50, 51, 52, 53).

11. Transport system (1) according to one of the preceding claims, **characterized in that** the mechanical drive (15) for driving the at least one runner (2) by means of mechanical forces comprises a motor-driven transport element (15.1) circulating endlessly along the transport route (TS), on which a plurality of followers (15.2) are arranged which move with the transport element (15.1), and wherein the followers (15.2) are in pushing operative engagement with the at least one runner (2) exclusively along the second transport route section (TS2).

12. Transport system (1) according to one of the preceding claims, **characterized in that** the mechanical drive (15) comprises a plurality of deflection devices (15.3), for example in the form of deflection rollers, which guide and deflect the transport element (15.1) which circulates endlessly within the running rail (2) in such a way that the followers (15.2) moving with the transport element (15.1) are in mechanical operative engagement with the at least one runner (2) exclusively in the region of the second transport section (TS2).

13. Transport system (1) according to one of the preceding claims, **characterized in that** the mechanical drive (15) is configured as a belt drive which comprises a plurality of followers (15.2) arranged on a transport element (15.1) configured as a belt, which are in pushing operative engagement with the at least one runner (2) along the second transport route section (TS2) and/or **in that** the respective follower (15.2) of the transport element (15.1) configured as a belt is in mechanical operative engagement with the signal transmitter (13) of the at least one runner (2) whereby the follower (15.2) pushes the at least one runner (2) on the signal transmitter (13) along the second transport route section (TS2) in the transport direction.

## Revendications

1. Système de transport (1), destiné à convoyer des objets le long d'un trajet de transport (TS), le trajet de transport (TS) étant constitué d'au moins un premier tronçon (TS1) de trajet de transport et d'au moins un deuxième tronçon (TS2) de trajet de transport,
le système de transport (1) comprenant au moins un rail de roulement (2) stationnaire et au moins un chariot (3) déplaçable le long du rail de roulement (2), pour le convoyage des objets le long du trajet de transport (TS),
comprenant par ailleurs un entraînement (4) électromagnétique, destiné à entraîner l'au moins un chariot (3) le long du premier tronçon (TS1) de trajet de transport par le moyen d'une force électromagnétique, l'entraînement (4) électromagnétique comportant une pluralité d'éléments de bobine (9) stationnaires et au moins un aimant permanent (8),
les éléments de bobine (9) stationnaires de l'entraînement (4) électromagnétique étant prévus sur le rail de roulement (2) stationnaire exclusivement le long du premier tronçon (TS1) de trajet de transport et l'au moins un aimant permanent (8) étant prévu sur l'au moins un chariot (3) et le système de transport (1) comportant un entraînement (15) mécanique, destiné à entraîner l'au moins un chariot (3) le long du deuxième tronçon (TS2) de trajet de transport par le moyen de forces mécaniques, **caractérisé en ce que** le rail de roulement (2) comporte au moins par endroits, le long du premier et / ou du deuxième tronçon (TS1, TS2) de trajet de transport un premier et un deuxième système de guidage (30, 31), au moyen duquel l'au moins un chariot (3) est guidé respectivement de part et d'autre avec deux axes articulés (GA1, GA2) espacés l'un de l'autre et s'écoulant respectivement entre le premier et le deuxième système de guidage (30, 31), les axes articulés (GA1, GA2) étant guidés chacun sur une première extrémité (GAS11, GAS21) libre avec un premier système de guidage et de logement (32.1, 32.2) dans le premier système de guidage (30) et sur une deuxième extrémité (GAS12, GAS22) libre respective avec un deuxième système de guidage et de logement (33.1, 33.2) dans le deuxième système de guidage (31), les premiers et deuxièmes systèmes de guidage et de logement (32.1, 32.2, 33.1, 33.2) comprenant chacun au moins un premier et un deuxième galets de roulement (34...37) qui sont guidés entre une première et une deuxième surfaces de roulement (30.1 et 30.2 ou. 31.1 et 31.2), mutuellement opposées et s'écoulant à la parallèle des axes articulés (GA1, GA2) du système de guidage (30, 31) respectif, le premier galet de roulement (34, 36) respectif s'appuyant dans une première section d'appui (30.11, 31.11) de la première surface de roulement (30.1, 31.1) et le deuxième galet de roulement (35, 37) respectif s'appuyant dans une deuxième section d'appui (30.21, 31.21) de la deuxième surface de roulement (30.2, 31.2) et étant guidés en précontrainte réciproque, la première et la deuxième sections d'appui (30.11 et 30.21 ou 31.11 et 31.21) étant décalées l'une par rapport à l'autre le long des axes articulés (GA1, GA2) et étant mutuellement opposées, et le premier et / ou le deuxième axe articulé (GA1, GA2) du chariot (3) comportant respectivement sur la première et la deuxième extrémité (GAS11, GAS12, GAS21, GAS22) libre un premier et un deuxième tronçon (GAA1, GAA2) d'axe articulé, le premier tronçon (GAA1) d'axe articulé constituant un premier axe de rotation (RA1) pour le premier galet de roulement (34 et 36) respectif et le deuxième tronçon (GAA2) d'axe articulé constituant un deuxième axe de rotation (RA2) pour le deuxième galet de roulement (35 et 37) respectif et le premier axe de rotation (RA1) respectif s'écoulant en étant décalé, notamment décalé à la parallèle par rapport au deuxième axe de rotation (RA2) respectif et / ou le premier et / ou le deuxième axe articulé (GA1, GA2) étant conçu sous la forme d'un axe excentrique dans la zone des tronçons (GAA1, GAA2) d'axe articulé respectifs.

2. Système de transport (1) selon la revendication 1, **caractérisé en ce que** le trajet de transport (TS) est conçu en révolution continue avec un premier et un deuxième tronçons curvilignes (B1, B2) et un premier et un deuxième tronçons rectilignes (G1, G2), le premier tronçon (TSA1) de trajet de transport étant prévu au moins sur le premier tronçon rectiligne (G1) et / ou **en ce que** le deuxième tronçon (TSA2) de trajet de transport est conçu au moins sur le deuxième tronçon rectiligne (G2), ainsi qu'au moins par endroits sur le premier et deuxième tronçons curvilignes (B1, B2) et / ou en en ce que le premier tronçon (TSA1) de trajet de transport du trajet de transport (TS) est constitué par le premier tronçon rectiligne (G1) et le deuxième tronçon (TS2) de trajet de transport est constitué par les deux tronçons (B1, B2) curvilignes et par le deuxième tronçon rectiligne (G2) reliant lesdits tronçons curvilignes (B1, B2).

3. Système de transport (1) selon la revendication 2, **caractérisé en ce que** le long du premier tronçon (TS1) de trajet de transport conçu en tant que premier tronçon rectiligne (G1) est prévu l'entraînement (3) électromagnétique, destiné à entraîner l'au moins un chariot (2) par le moyen de forces électromagnétiques et / ou **en ce que** le long du deuxième tronçon (TS2) de trajet de transport conçu en tant que deuxième tronçon rectiligne (G2) reliant les deux tronçons curvilignes (B1, B2) et le deuxième tronçon (TS2) de trajet de transport reliant lesdits tronçons curvilignes (B1, B2) est prévu l'entraînement (15) mécanique, destiné à entraîner l'au moins un chariot (2) par le moyen de forces mécaniques.

4. Système de transport (1) selon la revendication 1, **caractérisé en ce que** les deux extrémités (GAS11, GAS12 ; GAS21, GAS22) libres respectives des deux axes articulés (GA1 et GA2) sont guidées dans le premier et le deuxième systèmes de guidage (30, 31) dans deux plans de guidage (FE1, FE2) orientés à l'opposée et à la parallèle du trajet de transport (TS) et / ou **en ce que** le premier et deuxième galets de roulement (34, 35) respectifs du premier système de guidage et de logement (32.1, 32.2) correspondant sont prévus en étant rotatifs autour de l'axe articulé (GA1, GA2) respectif et directement au voisinage de celui-ci dans la zone de la première extrémité libre (GAS11, GAS21) respective et / ou **en ce que** le premier et deuxième galets de roulement (36, 37) respectifs du deuxième système de guidage et de logement (33.1, 33.2) correspondant sont prévus en étant rotatifs autour de l'axe articulé (GA1, GA2) respectif et directement au voisinage de celui-ci dans la zone de la deuxième extrémité libre (GAS12 ; GAS22) respective.

5. Système de transport (1) selon l'une quelconque des revendications précédentes, **caractérisé en ce qu'**en étant adjacent à la première section d'appui (30.11) de la première surface de guidage (30.1), le premier galet de roulement (34) respectif du premier système de guidage et de logement (32.1, 32.2) est guidé en étant précontraint contre le deuxième galet de roulement (35) respectivement adjacent à la deuxième section d'appui (30.21) de la deuxième surface de guidage (30.2) dans le premier système de guidage (30) et **en ce qu'**en étant adjacent à la première section d'appui (31.11) de la première surface de roulement (31.1), le premier galet de roulement (36) respectif du deuxième système de guidage et de logement (33.1, 33.2) est guidé en étant précontraint contre le deuxième galet de roulement (37) respectivement adjacent à la deuxième section d'appui (31.21) de la deuxième surface de roulement (31.2) dans le deuxième système de guidage (31) et / ou **en ce que** le premier et deuxième galets de roulement (34, 35) du premier système de guidage et de logement (32.1, 32.2) de l'axe articulé (GA1, GA2) correspondant sont guidés en étant précontraints par rapport aux premier et deuxième galets de roulement (36, 37) respectifs du deuxième système de guidage et de logement (33) de l'axe articulé (GA1, GA2) correspondant.

6. Système de transport (1) selon l'une quelconque des revendications précédentes 1 à 3, **caractérisé en ce que** le premier système de guidage (30) comporte entre la première et la deuxième surfaces de guidage (30.1, 30.2) un premier espace de guidage (FR1), qui dans la zone de la première et de la deuxième surfaces d'appui (30.11, 30.21) revient en arrière dans le premier espace de guidage (FR1) **en ce que** le premier espace de guidage (FR1) est conçu avec un échelonnement dans cette zone et / ou **en ce que** le deuxième système de guidage (31) comporte entre la première et la deuxième surfaces de guidage (31.1, 31.2) un deuxième espace de guidage (FR2), qui dans la zone de la première et de la deuxième surfaces d'appui (31.11, 31.21) revient en arrière dans le deuxième espace de guidage FR2 **en ce que** le deuxième espace de guidage (FR2) est conçu avec un échelonnement dans cette zone.

7. Système de transport (1) selon l'une quelconque des revendications précédentes, **caractérisé en ce que** les galets de roulement (34...37) présentent des diamètres extérieurs conçus de manière identique les uns avec les autres et / ou **en ce que** tous les galets de roulement (34...37) sont logés par le moyen de deux roulements à rouleaux (RL1, RL2) de manière rotative autour de l'axe articulé (GA1, GA2) correspondant.

8. Système de transport (1) selon l'une quelconque des revendications précédentes, **caractérisé par** plusieurs chariots (3) déplaçables indépendamment les uns des autres et de manière autonome les uns par rapport aux autres le long du trajet de transport (TS), l'entraînement (4) électromagnétique étant conçu sous la forme d'un entraînement linéaire, de préférence sous la forme d'un entraînement linéaire par stator longitudinal.

9. Système de transport (1) selon l'une quelconque des revendications précédentes, **caractérisé en ce que** le chariot (3) comporte sur une face inférieure (3.2) opposée à une face supérieure (3.1) au moins quatre axes articulés (GA3, GA4, GA5, GA6) supplémentaires, debout par leur extension longitudinale respective à la perpendiculaire des deux premiers axes articulés (GA1, GA2), qui sont mutuellement opposés par paires le long d'un rail de guidage (54) et / ou **en ce que** tous les galets de roulement (50, 51, 52, 53) sont conçus à l'identique les uns des autres, ainsi que de préférence à l'identique des galets de roulement (34...37) et / ou **en ce que** tous les galets de roulement (50, 51, 52, 53) sont logés chacun par le moyen de deux roulements à rouleaux (RL1, RL2) de manière rotative autour de l'axe articulé (GA3, GA4, GA5, GA6) correspondant.

10. Système de transport (1) selon l'une quelconque des revendications précédentes, **caractérisé en ce que** le rail de guidage (54) est prévu sur la face supérieure d'un module d'entraînement (5) du rail de roulement (2), le long de l'extension longitudinale de celui-ci et est en engrènement actif avec les galets de roulement (50, 51, 52, 53) placés sur la face inférieure (3.2) du chariot (3) et / ou **en ce que** le rail de guidage (54) constitue pour le chariot (3) un guidage latéral, qui avec ses galets de roulement (50, 51, 52, 53), roule pendant son déplacement de part et d'autre ainsi qu'en contact complémentaire le long du trajet de transport (TS) sur le rail de guidage (54) ou se déroule sur celui-ci.

11. Système de transport (1) selon l'une quelconque des revendications précédentes, **caractérisé en ce que** l'entrainement (15) mécanique destiné à entraîner l'au moins un chariot (2) par le moyen de forces mécaniques comporte un élément de transport (15.1), entraîné par moteur, en révolution continue le long du trajet de transport (TS), sur lequel sont placés plusieurs entraîneurs (15.2) qui se déplacent conjointement avec l'élément de transport (15.1) et les entraîneurs (15.2) se trouvant en engrènement actif en poussée avec l'au moins un chariot (2) exclusivement le long du deuxième tronçon (TS2) de trajet de transport.

12. Système de transport (1) selon l'une quelconque des revendications précédentes, **caractérisé en ce que** l'entraînement (15) mécanique comporte plusieurs systèmes de renvoi (15.3), par exemple sous la forme de galets de renvoi, qui guident et renvoient l'élément de transport (15.1) en révolution continue à l'intérieur du rail de roulement (2), de telle sorte que les entraîneurs (15.2) déplacés conjointement avec l'élément de transport (15.1) se trouvent en engrènement mécanique actif avec l'au moins un chariot (2) exclusivement dans la zone du deuxième tronçon (TS2) de trajet de transport.

13. Système de transport (1) selon l'une quelconque des revendications précédentes, **caractérisé en ce que** l'entraînement (15) mécanique est conçu sous la forme d'un entrainement par courroie qui comporte plusieurs entraîneurs (15.2) placés sur un élément de transport (15.1) conçu sous la forme d'une courroie, qui le long du deuxième tronçon (TS2) de trajet de transport se trouvent en engrènement actif par poussée avec l'au moins un chariot (2) et / ou **en ce que** l'entraîneur (15.2) respectif de l'élément de transport (15.1) conçu sous la forme d'une courroie se trouve en engrènement mécanique actif avec le générateur de signaux (13) de l'au moins un chariot (2), **en ce que** l'entraîneur (15.2) pousse l'au moins un chariot (2) sur le générateur de signaux (13) dans la direction de transport le long du deuxième tronçon (TS2) de trajet de transport.
